(19)

Europäisches
Patentamt
European
Patent Office
Office européen
des brevets

(11) **EP 3 352 126 A1**

(12) **EUROPEAN PATENT APPLICATION**

(43) Date of publication:
**25.07.2018 Bulletin 2018/30**

(51) Int Cl.:
***G06Q 30/02*** *(2012.01)*

(21) Application number: **18152826.6**

(22) Date of filing: **22.01.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **23.01.2017 JP 2017009693**
**06.11.2017 JP 2017213650**

(71) Applicant: **Sony Corporation**
**Tokyo 108-0075 (JP)**

(72) Inventor: **KIMISHIMA, Masato**
**Tokyo, 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND
COMPUTER PROGRAM**

(57)    There is provided an information processing device including: a determination unit that determines a similarity of positions of a plurality of users on a basis of time series data which is acquired for each of the users and with which a movement state of each of the users can be specified.

**FIG. 4**

**Description**

CROSS REFERENCE TO RELATED APPLICATIONS

This application claims the benefit of Japanese Priority Patent Application JP 2017-009693 filed January 23, 2017, and Japanese Priority Patent Application JP 2017-213650 filed November 6, 2017.

BACKGROUND

The present disclosure relates to an information processing device, an information processing method, and a computer program.

As a technology of specifying a user positioned at a specific place, for example, JP 2010-108037A discloses a technology in which, in a case where a plurality of users are recognized, a user in a least distance indicated on the basis of a position detected by a person position detection unit and a position expressed by an individual character of a user is determined as a user present at a specific position. In the technology disclosed in JP 2010-108037A, an individual can be recognized as being in a specific place without a special device carried by the use. However, in a case where an individual does not carry such a special device, it is necessary to install infrared sensors or the like in places in which the presence of a user is desired to be recognized, which restricts places in which a position of a user can be specified.

Meanwhile, near field wireless communication is generally used in a case where a position of a user is specified using a sensor included in a terminal carried by an individual. For example, Bluetooth (registered trademark) is mounted in mobile communication terminals and the like as a standard and is highly versatile. In addition, Wi-Fi positioning sensors or the Global Positioning System (GPS) are likewise mounted as a standard in general-purpose terminals such as mobile communication terminals, and it is also easy to specify a position of a user on the basis of a measurement result obtained from the systems.

SUMMARY

Here, in a case where users who are at the same position are specified, accuracy of estimation of the distance between two points using Bluetooth (registered trademark) is low, and it is not possible to determine the distance between the two points at different times. On the other hand, in a case where a Wi-Fi positioning sensor or Global Positioning System (GPS) is used, the distance between two points can be calculated even at different times in principle. However, since accuracy of such measurement is heavily affected by environments, the measurement is lacking in stability.

Therefore, the present disclosure proposes a novel and improved information processing device, information processing method, and computer program which can perform same position determination of users with high accuracy without being affected by an environment.

According to an embodiment of the present disclosure, there is provided an information processing device including: a determination unit that determines a similarity of positions of a plurality of users on a basis of time series data which is acquired for each of the users and with which a movement state of each of the users can be specified.

In addition, according to an embodiment of the present disclosure, there is provided an information processing method including: acquiring, by a sensor, respective pieces of time series data with which movement states of a plurality of respective users can be specified for the users; and determining, by a processor, a similarity of positions of the users on a basis of the time series data.

Further, according to an embodiment of the present disclosure, there is provided a computer program for causing a computer to function as an information processing device that includes a determination unit that determines a similarity of positions of a plurality of users on a basis of time series data which is acquired for each of the users and with which a movement state of each of the users can be specified.

Various respective aspects and features of the invention are defined on the appended claims.

According to an embodiment of the present disclosure as described above, same position determination of users can be performed with high accuracy without being affected by an environment. Note that the effects described above are not necessarily limitative. With or in the place of the above effects, there may be achieved any one of the effects described in this specification or other effects that may be grasped from this specification.

BRIEF DESCRIPTION OF THE DRAWINGS

Embodiments of the invention will now be described with reference to the accompanying drawings, throughout which like parts are referred to by like references, and in which:

FIG. 1 is an illustrative diagram for describing an overview of a same position determination process for a plurality of users and an attribute specification process for the plurality of users using a same position determination result performed by an information processing device according to a first embodiment of the present disclosure;

FIG. 2 is an illustrative diagram showing a use case of the attribute specification process for a plurality of users using a same position determination result according to the embodiment;

FIG. 3 is an illustrative diagram showing another use case of the attribute specification process for a plurality of users using a same position determination result according to the embodiment;

FIG. 4 is an illustrative diagram showing still another use case of the attribute specification process for a plurality of users using a same position determination result according to the embodiment;

FIG. 5 is an illustrative diagram for describing possibility of positioning depending on an environment in positioning using GPS;

FIG. 6 is an illustrative diagram for describing a positioning error in Wi-Fi positioning or base station positioning;

FIG. 7 is an illustrative diagram for describing an error in a movement track using PDR;

FIG. 8 is an illustrative diagram for describing environment dependency of GPS and an inertial sensor;

FIG. 9 is a functional block diagram showing a configuration of an information processing system according to the embodiment;

FIG. 10 is a sequence diagram showing a flow of a process of the information processing system when the same position determination process according to the embodiment is executed;

FIG. 11 is a flowchart showing an initial setting process in a relative track calculation process according to the embodiment;

FIG. 12 is a flowchart showing a position calculation process of each time in the relative track calculation process according to the embodiment;

FIG. 13 is a flowchart showing an absolute position information acquisition process according to the embodiment;

FIG. 14 is a flowchart showing a same position determination process according to the embodiment;

FIG. 15 is an illustrative diagram with regard to correction of a scale of a relative track or a deviation in an azimuth of an entire track;

FIG. 16 is an illustrative diagram for describing a relation between a length of a buffer time of a relative track and accuracy of same position determination;

FIG. 17 is an illustrative diagram for describing an error determination method using area determination in same position determination based on similar tracks in different places;

FIG. 18 is an illustrative diagram for describing an error determination method using a buffer time change of a relative track in same position determination based on similar tracks in different places;

FIG. 19 is an illustrative diagram for describing an overview of data synchronization of a relative track that is subject to same position determination;

FIG. 20 is an illustrative diagram for describing correspondence of relative tracks and relative positions;

FIG. 21 is an illustrative diagram for describing compartmenting of time series data in units of scales;

FIG. 22 is an illustrative diagram for describing correction of scale of time series data;

FIG. 23 is an illustrative diagram for describing resampling after correction of scale;

FIG. 24 is an illustrative diagram for describing time shift correction in which a deviation in absolute times of relative tracks is corrected;

FIG. 25 is an illustrative diagram for describing correction of azimuths of each of relative tracks;

FIG. 26 is an illustrative diagram for describing correction of scale of relative tracks;

FIG. 27 is an illustrative diagram for describing correction of positions of relative tracks;

FIG. 28 is an illustrative diagram for describing calculation of degrees of track deviation of relative tracks;

FIG. 29 is a sequence diagram showing a flow of a process of the information processing system when a social attribute specification process for a plurality of users according to the embodiment is executed;

FIG. 30 is an illustrative diagram for describing a use case of same position determination performed in real time according to a second embodiment of the present disclosure;

FIG. 31 is a flowchart showing a same position determination process performed in real time according to the embodiment;

FIG. 32 is a functional block diagram showing a configuration of an information processing system according to a third embodiment of the present disclosure;

FIG. 33 is a flowchart showing a behavior specification process using a place attribute table according to the embodiment;

FIG. 34 is an illustrative diagram for describing detection of a three-dimensional track based on a detected value of a barometric sensor;

FIG. 35 is an illustrative diagram showing an example of a place attribute table storage unit;

FIG. 36 is an illustrative diagram showing distribution of the number of people at times and distribution of the number of people in stay time periods as an example of place attribute information of a plurality of users present at the same position;

FIG. 37 is an illustrative diagram for describing a matching process of place attribute information and a place attribute table;

FIG. 38 is an illustrative diagram showing specification of user behaviors based on a tweet of a user and an updating process for a place attribute table;

FIG. 39 is an illustrative diagram for describing updating of a place attribute table;

FIG. 40 is an illustrative diagram for describing a social attribute table;

FIG. 41 is a block diagram showing an example of a hardware configuration of a device according to an embodiment of the present disclosure;

FIG. 42 includes tables showing examples of same position determination using time series data of detected values of a sensor;

FIG. 43 includes diagrams showing examples of same position determination using time series data of detected values of an environment sensor;

FIG. 44 is an illustrative diagram showing an example of an information collection consent screen displayed on a device;

FIG. 45 is an illustrative diagram showing an example of an absolute time transmission consent screen displayed on the device; and

FIG. 46 is an illustrative diagram showing an example of a relative time transmission consent screen displayed on the device.

DETAILED DESCRIPTION OF THE EMBODIMENT(S)

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided below in the following order.

1. First embodiment (same position determination process and attribute specification process)

    1.1 Overview

        (1) Same position determination process and attribute specification process
        (2) Positioning technology in same position determination process

    1.2. Configuration of information processing system

        (1) Device
        (2) Server

    1.3. Same position determination process

        (1) Overview of process
        (2) Relative track calculation process
        (3) Absolute position information acquisition process
        (4) Same position determination process

    1.4. Social attribute specification process

2. Second embodiment (real-time same position determination)
3. Third embodiment (behavior specification based on place attribute table)

    3.1. Configuration of information processing system

        (1) Device
        (2) Server

3.2. Behavior specification process using place attribute table

(1) Area screening
(2) Same position determination process
(3) Place attribute specification process and behavior specification process
(4) Social attribute determination process

4. Hardware configuration
5. Supplement

5.1. Feature amount other than relative track
5.2. User consent to information collection

<1. First embodiment

(1.1. Overview)

(1) Same position determination process and attribute specification process

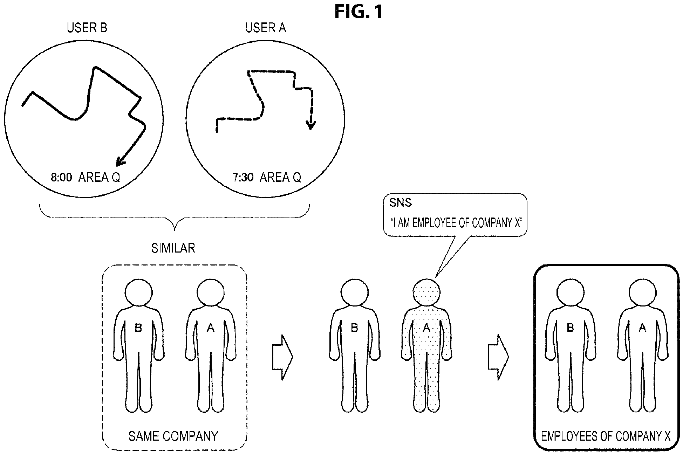

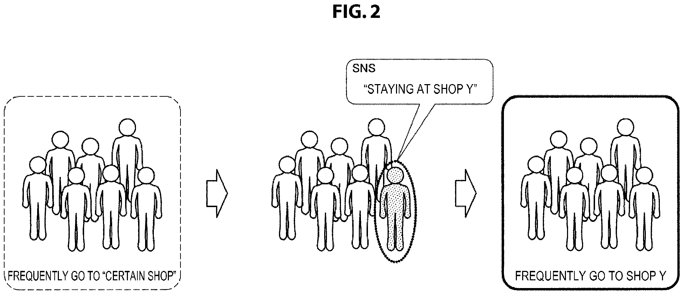

First, overviews of a same position determination process for a plurality of users and an attribute specification process for a plurality of users performed by an information processing device according to a first embodiment of the present disclosure using a same position determination result will be described on the basis of FIG. 1 to FIG. 4. Note that FIG. 1 is an illustrative diagram for describing the overviews of the same position determination process for a plurality of users and the attribute specification process for a plurality of users performed by the information processing device according to the present embodiment using a same position determination result. FIG. 2 to FIG. 4 are illustrative diagrams showing use cases of the attribute specification process for a plurality of users using same position determination results.

The information processing device according to the present embodiment performs the same position determination process for determining that a plurality of users are at the same position and the attribute specification process for specifying specific relevance between the plurality of users on the basis of a same position determination process.

The same position determination process is designed to determine users present at the same position on the basis of time series data with which movement states of the users can be specified. Time series data with which a movement state of a user can be specified in the present embodiment is time series data related to a position of the user which is information indicating a positional change (i.e., movement) of the user in a given period. Such data includes, for example, time series data of detected values of an inertial sensor, a movement track of a user obtained on the basis of detected values of an inertial sensor, time series data of absolute position information obtained from GPS or Wi-Fi positioning, and the like. In the same position determination process, presence at the same position at the same time or at different times is determined on the basis of such time series data and area information acquired from the time series data.

Users whose presence at the same position has been confirmed in the same position determination process have common reasons for being at the position and some kind of relevance to each other. Thus, in the same position determination process, not only can users present at the same position be specified, but relevant users can also be specified.

In the attribute specification process, social attributes common to a plurality of users whose presence at the same position has been specified in the same position determination process and who are determined to be relevant to each other are specified. In the present embodiment, a social attribute refers to a social relation including social affiliation, a social standing, a social behavior, or the like. Social attributes include, for example, a place where one works (company), a place where one studies (school), a shop or a place that one frequents, a place at which one stops (a specific product shelf in a supermarket, a place of a buffet or a buffet-style restaurant at which a certain type of food is placed, etc.), and the like. In addition, with regard to a social attribute in the present embodiment, for example, information indicating only relevance of working in the same company refers to a relative value of a social attribute, and for example, detailed information indicating working at X company refers to an absolute value of a social attribute.

In the attribute specification process, a social attribute of each user is specified on the basis of a social attribute obtained from at least one of a plurality of users specified as having some kind of relevance. A relative value of a social attribute of a user may be specified using, for example, an area or a time slot in which the user is present, behavior recognition information, or the like. On the other hand, an absolute value of a social attribute of a user may be specified using absolute position information obtained using GPS, Wi-Fi positioning, or the like or using absolute information publicized by a certain user on an SNS, or the like. Note that absolute position information is a kind of absolute information. If an absolute value of a social attribute of at least one user is specified, an absolute value of the social attribute of another user having the same relative value of the social attribute can also be specified.

It is assumed that, for example, a movement track of a user A in an area Q at 8:00 a.m. and a movement track of a user B in the area Q at 7:30 a.m. are obtained as illustrated in FIG. 1. The movement tracks are assumed to have been determined to be similar to each other in the same position determination process. In addition, it is assumed that a relative value of a social attribute of the user A and the user B working in the same company is specified on the basis of information including that a time slot in which the movement tracks are obtained is a work time slot in the morning of weekdays and that the user A and the user B are in the same building on weekdays.

If an absolute value of the social attribute of any one of the user A and the user B can be acquired when the relative value of the social attribute of the user A and the user B is known, an absolute value of the social attribute of the other user can also be obtained. If the user A publicizes that he or she is an employee of an X company on, for example, an SNS in the state in which the relative value of the social attribute of the user A and the user B working in the same company is specified, for example, the user B, who works in the same company as the user A, can be specified as an employee of the X company as illustrated in FIG. 1. In the attribute specification process, an attribute of a plurality of users having some kind of relevance can be specified on the basis of absolute information of one of the users as described above. Furthermore, if only a relative value of a social attribute of the other user of working in the same company as the user A can be specified, the other user can also be specified as an employee of the X company.

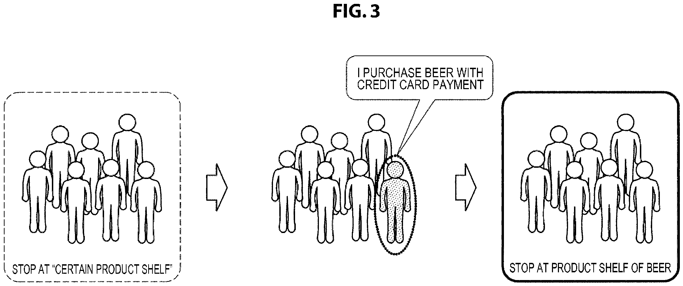

Likewise, it is assumed that a relative value of a social attribute of a plurality of users frequently going to a "certain shop" is known as illustrated in, for example, FIG. 2. In this case, if one user reveals that he or she is "in a shop Y," other users who have the same relative value of the social attribute as the aforementioned user are also understood as "frequently going to the shop Y." In addition, it is assumed that a relative value of a social attribute of a plurality of users "stopping at a certain product shelf' of a supermarket is known as illustrated in, for example, FIG. 3. If "purchasing beer using a credit card" of one user is known in this case, "stopping at the product shelf of beer" of another user who has the same relative value of the social attribute as the aforementioned user can also be ascertained. In this manner, an absolute value of the social attribute of a user can be specified on the basis of a history of purchasing with credit card payment, and an absolute value of a social attribute of another user having the same relative value of the social attribute as a user whose absolute value of the social attribute has been specified can also be specified. In addition, an absolute value of the social attribute of "a user frequently stops at a product shelf' can also be used to ascertain a purchase behavior and a preference tendency of the users.

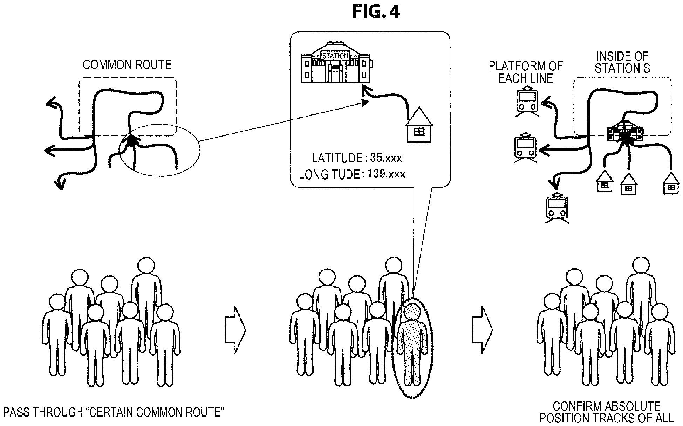

Furthermore, it is assumed that relevance of a plurality of users of passing through a "certain common route" is known as illustrated in, for example, FIG. 4. If an absolute position of one user before the user reaches the common route is acquired, an absolute position on the common route can be specified and an absolute position on another route connected to the common route can also be specified. For example, it is assumed that an absolute position track (a track expressed with latitude and longitude) of a route that a certain user passes through is obtained using GPS with high accuracy. In this case, a point of departure and a destination of the route may also be specified on the basis of GPS information and map information. It is assumed that, for example, a route of which an absolute position track has been acquired is a route from a residence of a user to a station S which is connected to the common route. In this case, an absolute position track of the common route is specified from the route of which the absolute position track has been specified, and further an absolute position track of another route connected to the common route can also be specified. For example, a specific route is specified such that the common route is located in inside the station S and another route connected to the common route is a line to which a user transfers in the station S. Then, by specifying the absolute position track of the common route, absolute position tracks of routes connected to the common route are also specified with respect to respective other users having relevance to the user. Furthermore, the location of the residence can also be specified on the basis of a stay time or the like of the user.

As described above, the presence of the plurality of users at the same position and some kind of relevance between the plurality of users can be specified using a result of the same position determination process. Furthermore, a relative value or an absolute value of a social attribute of relevant users can also be specified on the basis of a time, area information, absolute information of a user publicized on an SNS, or the like, and utilizing a result of the specification to acquire useful information through data mining can be considered.

(2) Positioning technology in same position determination process

Accuracy of a positioning technology for measuring a position of a user is important to accurately specify a plurality of users who have some kind of relevance in their presence at the same position. If there is an ideal positioning technology which enables highly accurate positioning without delay at all times regardless of whether indoors or outdoors, the presence of users at the same position can be determined using a simple technique of answering the question "are positions of N people at a certain time close to each other or not?" However, positioning techniques generally used at present have a variety of limitations.

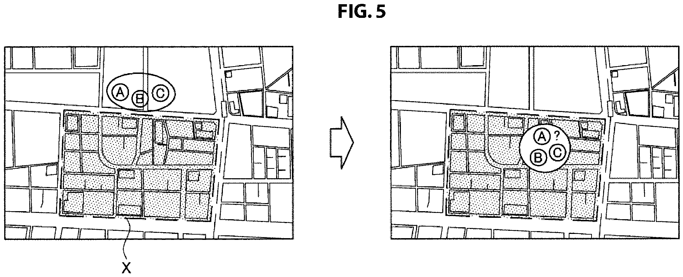

Positioning using GPS, for example, can measure outdoor positions of users with high accuracy as illustrated on the left side of FIG. 5. However, even outdoors, a positioning error of the GPS increases in places (e.g., an area X) that are surrounded by high buildings and the like such as a high-rise area. In addition, indoor positioning using GPS is virtually not possible as illustrated on the right side of FIG. 5. As described, positioning using GPS is heavily affected by an environment.

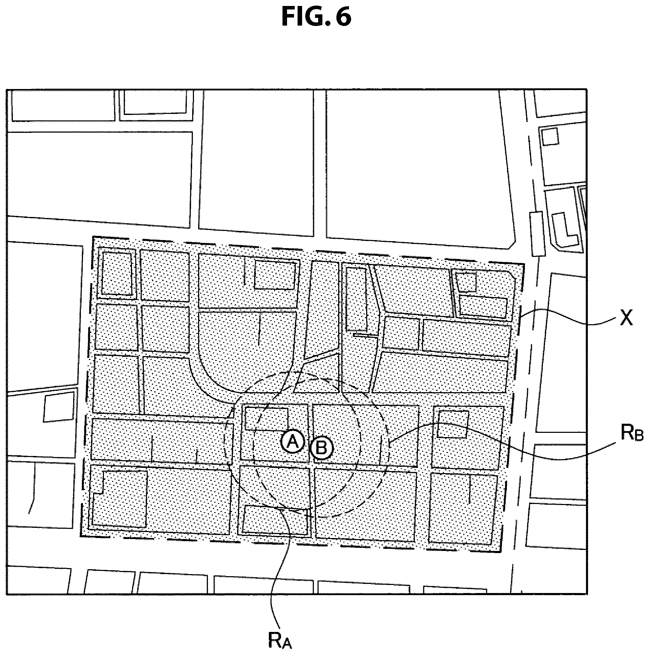

On the other hand, Wi-Fi positioning or positioning by a base station can be used for indoor positioning. In Wi-Fi positioning or positioning by a base station, however, positioning results with respect to a user A and a user B entail a positioning error within radii of $R_A$ and $R_B$ as illustrated in FIG. 6, and such a positioning error is generally significant. In addition, reinforcement of infrastructure is necessary to improve positioning accuracy, and same position determination for a plurality of users at a low cost is hard to realize.

In addition, Pedestrian Dead Reckoning (PDR) has been focused on recently as an indoor positioning technology. PDR is a relative positioning technology of estimating an advancing direction and a movement distance of a user and positioning the user on the basis of a change in detected values of an inertial sensor such as an acceleration sensor, an angular velocity sensor, or a gyro sensor mounted in a device carried by the user. Thus, an absolute position and an absolute azimuth of a user are estimated on the basis of a positioning result using PDR with reference to an absolute position and an absolute azimuth acquired from GPS or the like. In general, an absolute position of a user is estimated in indoor positioning using PDR on the basis of a positioning result measured after entrance of the user into an indoor place in the PDR with reference to positioning information (an absolute position and an absolute azimuth) of GPS acquired immediately before the entrance of the user into the indoor place. That is, accuracy of the absolute position and absolute azimuth estimated from the positioning result of the PDR depends on accuracy of the positioning information acquired using the GPS immediately before the entrance of the user into the indoor place, and an azimuth error in particular is significantly affected by the estimated absolute azimuth.

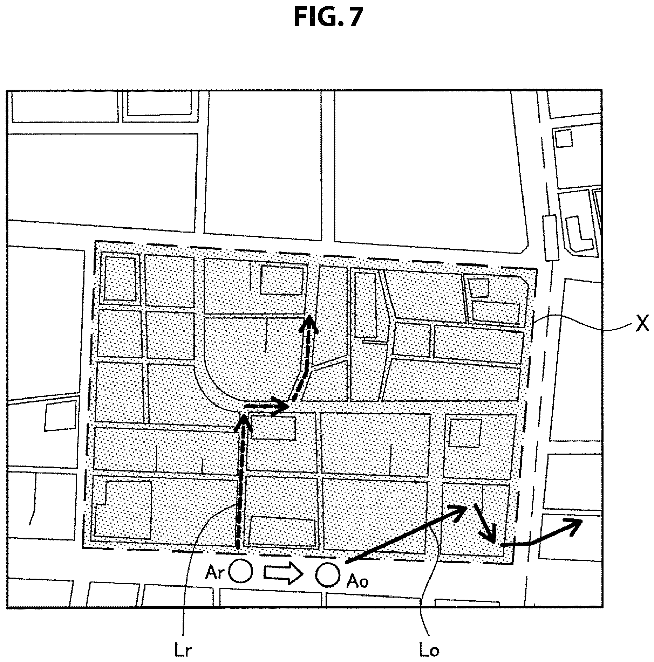

However, accuracy of GPS before entrance to an indoor place is low and positioning information of the GPS may have an error, and thus sufficient accuracy of positioning using PDR may be hard to guarantee. For example, if positioning information of GPS with regard to a movement track Lr starting from an actual position Ar of a user A in an area X acquired immediately before the user goes in the area X has an error, a GPS-measured position Ao deviates from the actual position Ar as illustrated in FIG. 7. In addition, a movement track Lo of the user A estimated from a positioning result of the PDR with reference to the measured position Ao also deviates from the actual movement track Lr as illustrated in FIG. 7, and thus it is hard to specify a correct movement track.

As described above, since positioning accuracy of the generally used current positioning technology is affected by an environment or infrastructure, there is a limitation on simply performing same position determination for a plurality of users with high accuracy on the basis of positioning results of the technology. Thus, the disclosure proposes a method of simply performing same position determination for users with high accuracy without being affected by an environment such as indoors or outdoors in the present embodiment. Specifically, same position determination for a plurality of users is performed using a similarity of time series data on the basis of the time series data of detected values of a sensor with which a movement state of a user can be specified and whose accuracy is not affected by an environment. Alternatively, same position determination for a plurality of users may be performed by acquiring relative tracks of a fixed time period from such time series data and determining a similarity of the relative tracks.

Sensors whose accuracy is not affected by an environment are inertial sensors including acceleration sensors, angular velocity sensors, gyro sensors, and the like. Note that, although characteristics of a sensor change slightly due to a temperature change, strictly speaking, no significant temperature change occurs when a device in which inertial sensors are mounted is worn on a human body, and such a change in the characteristics caused by an environment is negligible. In addition, a change in the sensor characteristics caused by an environmental change can also be minimized by using inertial sensors with low temperature dependency.

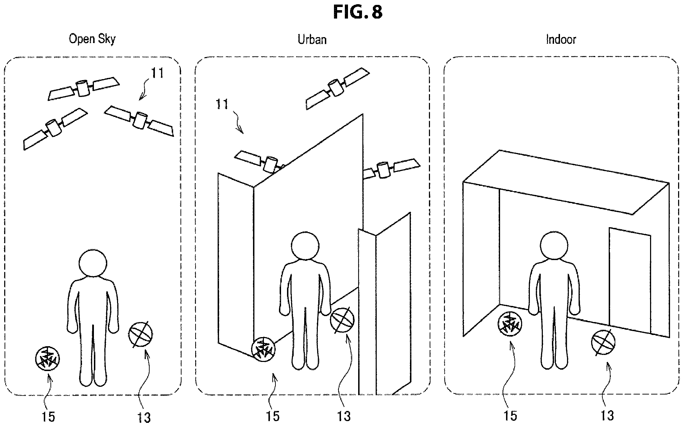

Inertial sensors are generally mounted in substantially all devices carried or worn by many users, such as smartphones and wearable terminals. Thus, it is not necessary to use a special device to perform same position determination for a plurality of users according to the present embodiment. In addition, a GPS or Wi-Fi function to be used for specifying absolute positions of users is also mounted in substantially all such devices, like the inertial sensors. As illustrated in FIG. 8, GPS 11, a gyro sensor 13, and an acceleration sensor 15 can all perform positioning of an outdoor open place with high accuracy. On the other hand, while positioning accuracy of the GPS 11 with respect to a place between skyscrapers and an indoor place at a city center deteriorates or positioning thereof is not possible, the gyro sensor 13 and the acceleration sensor 15 can perform reliable positioning with high accuracy without being affected by such an environment.

A same position determination process for a plurality of users performed on the basis of a relative track of a certain time period based on time series data of detected values of inertial sensors acquired for each user will be described below in the present embodiment. In addition, a social attribute specification process for the plurality of users based on a result obtained from the same position determination process will be described.

(1.2. Configuration of information processing system)

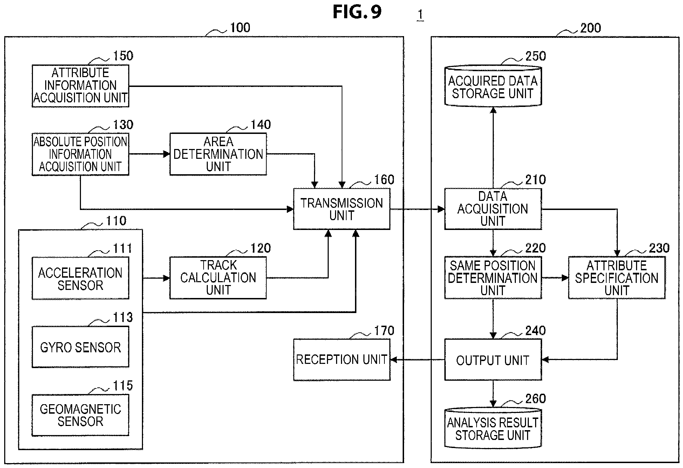

Before the same position determination process and the social attribute specification process according to the present embodiment are described, an information processing system 1 which executes the processes will be first described on the basis of FIG. 9. FIG. 9 is a functional block diagram showing a configuration of the information processing system 1 according to the present embodiment.

The information processing system 1 according to the present embodiment includes a device 100 held by a user and a server 200 which executes the same position determination process and the attribute specification process on the basis of information acquired by the device 100 as illustrated in FIG. 9. Although only one device 100 is illustrated in FIG. 9, the server 200 is connected to devices 100 each held by a plurality of users. The server 200 executes the same position determination process and the attribute specification process on the basis of data received by a plurality of devices 100. (1) Device

The device 100 is an information processing terminal held by a user, such as a smartphone or a wearable terminal. The device 100 includes a sensor unit 110, a track calculation unit 120, an absolute position information acquisition unit 130, an area determination unit 140, an attribute information acquisition unit 150, a transmission unit 160, and a reception unit 170 as illustrated in FIG. 9.

The sensor unit 110 includes one or a plurality of sensors which can detect attitudes and movements of the device 100, including inertial sensors, for example, an acceleration sensor 111, a gyro sensor 113, and the like. In addition, the sensor unit 110 may also include an environment sensor such as a geomagnetic sensor 115. The sensor unit 110 may also include, in addition to these sensors, an inertial sensor such as an angular velocity sensor, environment sensors such as a barometric sensor, a temperature sensor, a humidity sensor, or a wind speed sensor, a microphone, a camera, and the like. A detected value of each sensor of the sensor unit 110 is output to the track calculation unit 120. Note that the sensor unit 110 may output time series data of detected values of each of the sensors to the transmission unit 160 and enable the time series data to be transmitted from the transmission unit 160 to the server 200 without change.

The track calculation unit 120 calculates a relative track of a user holding the device 100 on the basis of a detected value input from the sensor unit 110. If detected values of at least the acceleration sensor 111 and the gyro sensor 113 among the sensors of the sensor unit 110 are acquired, the track calculation unit 120 can calculate the relative track. The calculation process of a relative track by the track calculation unit 120 will be described below in detail. The track calculation unit 120 outputs the calculated relative track to the transmission unit 160.

The absolute position information acquisition unit 130 acquires absolute position information of the device 100. The absolute position information acquisition unit 130 is, for example, a GPS receiver, a Wi-Fi reception unit, or the like. The absolute position information acquisition unit 130 outputs the acquired absolute position information of the device 100 to the area determination unit 140. Note that the absolute position information acquired by the absolute position information acquisition unit 130 may be directly output to the transmission unit 160.

The area determination unit 140 determines an area in which the device 100 is positioned on the basis of an absolute position acquired by the absolute position information acquisition unit 130. An area specified by the area determination unit 140 is assumed to be set in advance. The area in which the user (actually, the device 100) is present is used as information for avoiding erroneous same position determination in the present embodiment. Thus, high determination accuracy is not required with respect to the determination of the area, it is sufficient that an approximate position within a range of about dozens of meters can be specified. The area determination unit 140 outputs the determined area to the transmission unit 160.

The attribute information acquisition unit 150 acquires a social attribute of the user or information that can specify a social attribute. The attribute information acquisition unit 150 acquires, for example, information regarding a relative value or an absolute value of the social attribute publicized by the user from, for example, information stored in the device 100 or information input using the device 100. Alternatively, the attribute information acquisition unit 150 may specify a relative value or an absolute value of the social attribute of the user from a behavior performed by the user, like specifying a purchased product from a history of product purchases with payment by a credit card. The relative value or the absolute value of the social attribute of the user acquired by the attribute information acquisition unit 150 is used to specify a social attribute of another user who has been determined to have some kind of relevance to the user. Note that the absolute position information acquired by the absolute position information acquisition unit 130 can also be used as information for specifying a social attribute of the user.

The transmission unit 160 transmits various kinds of information input from the sensor unit 110, the track calculation unit 120, the absolute position information acquisition unit 130, the area determination unit 140, and the attribute information acquisition unit 150 to the server 200.

The reception unit 170 receives various kinds of information transmitted from the server 200. The information received by the reception unit 170 is processed in accordance with applications, for example, being displayed on a display unit (which is not illustrated) provided in the device 100, being recorded in a storage unit (which is not illustrated), or the like.

(2) Server

The server 200 performs same position determination to determine whether users are (or have been) at the same position on the basis of information input from the device 100 of each user. In addition, the server 200 according to the present embodiment is assumed to be also capable of executing the social attribute specification process of specifying social attributes of a plurality of users on the basis of a result of same position determination. The server 200 includes a data acquisition unit 210, a same position determination unit 220, an attribute specification unit 230, an output unit 240, an acquired data storage unit 250, and an analysis result storage unit 260 as illustrated in FIG. 9.

The data acquisition unit 210 receives various kinds of information from a plurality of devices 100 which can communicate with the server 200. The data acquisition unit 210 acquires detected values of each of the sensors of the sensor unit 110 or a relative track of a user calculated by the track calculation unit 120, absolute position information acquired by the absolute position information acquisition unit 130, and area information specified by the area determination unit 140. The information is used in the same position determination process and output to the same position determination unit 220. In addition, the data acquisition unit 210 can also acquire a social attribute of a user acquired by the attribute information acquisition unit 150 or information with which a social attribute can be specified for the social attribute determination process. The corresponding information is output to the attribute specification unit 230. Furthermore, the data acquisition unit 210 may record acquired various kinds of information in the acquired data storage unit 250.

The same position determination unit 220 determines users present at the same position. The same position determination unit 220 according to the present embodiment determines a similarity of relative tracks of respective users and determines whether the users are at the same position. The same position determination unit 220 may also function as a function unit which serves as a synchronization processing unit which synchronizes data of same position determination subjects, a deviation degree calculation unit which calculates a degree of deviation of synchronized time series data, and a determination processing unit which performs same position determination of users on the basis of the calculated degree of deviation. Note that details of the same position determination process by the same position determination unit 220 will be described below. The same position determination unit 220 outputs a determination result to the output unit 240. Note that the determination result may also be output to the attribute specification unit 230.

The attribute specification unit 230 specifies a social attribute of a user determined to have some kind of relevance since the user is determined to be at the same position through the same position determination process. If a social attribute of at least one user or information with which a social attribute can be specified is acquired, the attribute specification unit 230 specifies the social attribute of all relevant users on the basis of the information. The attribute specification unit 230 outputs the specified social attribute to the output unit 240.

The output unit 240 transmits information to the device 100 connected to the server 200. The output unit 240 may also output, for example, a determination result of the same position determination unit 220 or the social attribute of the user specified by the attribute specification unit 230 to the device 100 of a user to be notified. In addition, the output unit 240 may record a processing result obtained in the server 200 in the analysis result storage unit 260.

The acquired data storage unit 250 is a storage unit which stores various kinds of information acquired from each of the devices 100. The analysis result storage unit 260 is also a storage unit which stores processing results obtained in the server 200. Information held in the storage units can also be used in data mining and the like.

The configuration of the information processing system 1 according to the present embodiment has been described. Note that, although the same position determination process and the social attribute specification process are set to be executed by one server 200 in the present embodiment, the present disclosure is not limited thereto. The same position determination process and the social attribute specification process may be executed by different servers or at least one process may be set to be executed by the device 100. In addition, although the area determination unit 140 is exemplified to be included in the device 100, the present disclosure is not limited thereto, and the area determination unit may be included in the server 200.

(1.3. Same position determination process)

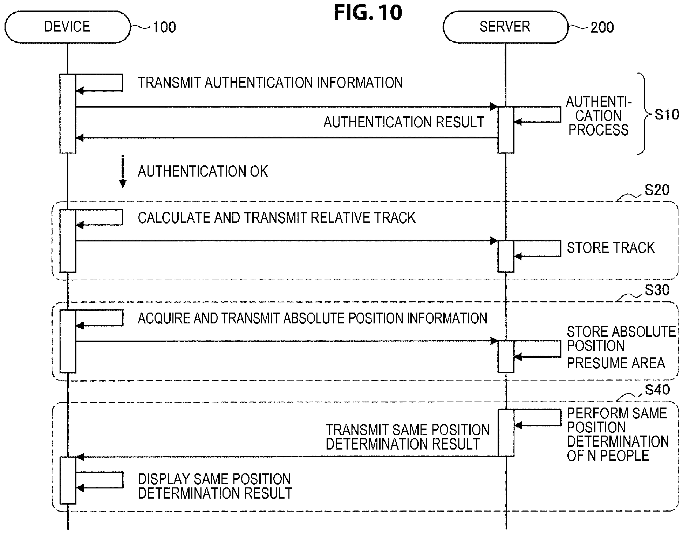

Next, the same position determination process according to the present embodiment will be described with reference to FIG. 10 to FIG. 27.

(1) Overview of process

First, an overview of processes when the same position determination process is executed will be described with reference to FIG. 10. FIG. 10 is a sequence diagram showing a flow of processes of the information processing system 1 when the same position determination process according to the present embodiment is executed. The processes start from an authentication process for a user (S10). When authentication information is transmitted from the device 100 of the user to the server 200, the server 200 executes the authentication process on the basis of the authentication information and transmits an authentication result to the device 100. When the user is authenticated, the device 100 and the server 200 execute processes from Steps S20 to S40.

When authentication is performed on the authentication information, the device 100 executes a process to acquire various kinds of information to be used in the same position determination process and output the information to the server 200. Specifically, a relative track acquisition process (S20) and an absolute position information acquisition process (S30) are executed. Step S20 and Step S30 are executed independently of each other at timings at which pieces of information necessary for the processes are acquired.

In the relative track acquisition process, the track calculation unit 120 calculates a relative track on the basis of detected values of the sensor unit 110 of the device 100. The calculated relative track is transmitted to the server 200 via the transmission unit 160 and recorded in the acquired data storage unit 250. The relative track calculation process by the track calculation unit 120 will be described below in detail.

In the absolute position information acquisition process, the device 100 transmits absolute position information acquired by the absolute position information acquisition unit 130 to the server 200 via the transmission unit 160. The server 200 records the received absolute position information of the device 100 in the acquired data storage unit 250. In addition, the server 200 specifies an area included in the absolute position information in the same position determination process. Note that, although the server 200 is set to have a function of an area determination unit and specifies an area in FIG. 10, the present disclosure is not limited thereto. In the case where the device 100 includes the area determination unit 140 as illustrated in FIG. 9, the device 100 may specify an area and notify the server 200 of the specified area along with absolute position information.

The relative track acquisition process (S20) and the absolute position information acquisition process (S30) are executed by the devices 100 of each of a plurality of users and the server 200 respectively. In addition, when information regarding the plurality of users is acquired for a predetermined time period or longer, the same position determination process (S40) for the users can be executed by the server 200. The same position determination process may be executed at a time at which the process can be executed or may be executed at a predetermined time interval (e.g., everyday) on the premise that the process can be executed. The server 200 may transmit a determination result of the same position determination process to each of the devices 100 if necessary. The device 100 that has received the determination result of the same position determination process may, for example, cause the determination result to be displayed on the display unit to notify the user of the result.

The overview of the processes when the same position determination process is executed has been described above. Each of the processes will be described in detail below.

(2) Relative track calculation process

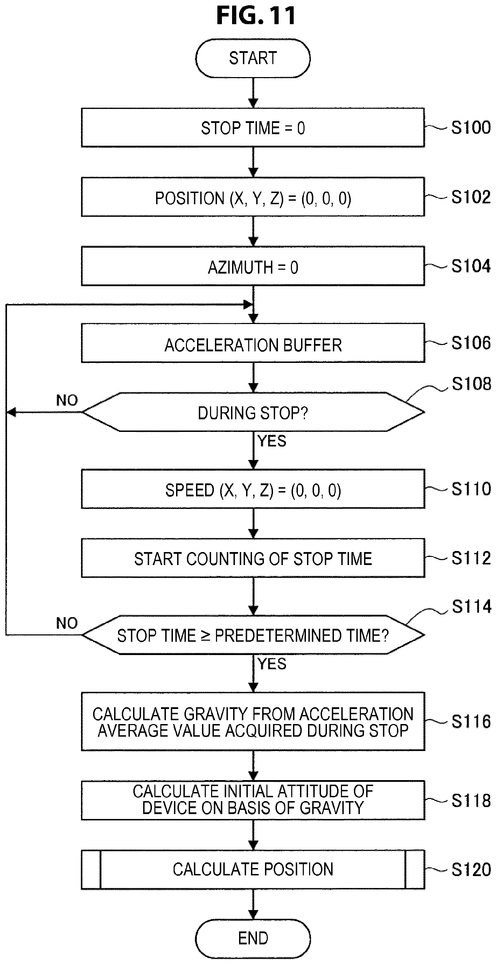

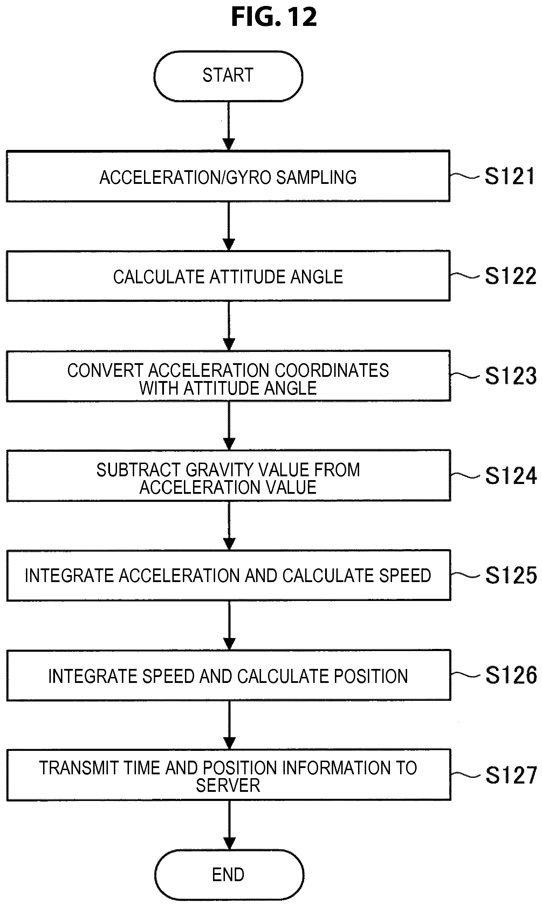

Calculation of a relative track performed in the relative track acquisition process (S20) of FIG. 10 may be performed through processes shown in, for example, FIG. 11 and FIG. 12. FIG. 11 is a flowchart showing an initial setting process in the relative track calculation process. FIG. 12 is a flowchart showing a position calculation process at each time in the relative track calculation process.

The track calculation unit 120 of the device 100 according to the present embodiment calculates a movement track of a user as a relative track obtained on the basis of detected values from the inertial sensors. A case where a relative track is calculated using PDR will be described in the present embodiment. To acquire a relative track, first, an initial track which serves as a reference in the initial setting process is decided, and then a movement quantity and a movement direction from an initial attitude are specified by calculating a position at each time.

Specifically, first, a stop time period, a position, and an azimuth when the initial setting process shown in FIG. 11 starts are set to zero to specify an initial attitude (S100 to S104). The stop time period refers to a time period in which a state of the device 100 showing no change in acceleration (or in which acceleration is regarded to be substantially zero) continues. The position and the azimuth are a relative position and a relative direction.

Next, the track calculation unit 120 refers to buffered detected values of the acceleration sensor 111 (S106) and determines whether a user has stopped moving from a change of the detected values (S108). Since the initial attitude is set on the basis of acceleration at the time of stop, it is necessary to check whether the user has stopped moving. Stop of the user may be determined by, for example, acquiring acceleration for a predetermined time period (e.g., one second) or longer and determining whether a variance value of the acquired acceleration is equal to or smaller than a predetermined value. In a case where the variance value is greater than the predetermined value and thus a stop determination condition is not satisfied, the process returns to Step S106, and the processes from Step S106 are executed again. On the other hand, in a case where the variance value is determined to be equal to or smaller than the predetermined value in Step S108, the user is regarded as having stopped, and the track calculation unit 120 sets a movement speed of the user at the time to zero (S110) and starts counting of the stop time period (S112).

Then, it is determined whether the stop time period is a predetermined time period (e.g., 5 seconds) or longer (S114), and in a case where the stop time period is shorter than the predetermined time period, the process returns to Step S106 and the processes from Step S106 are executed again. On the other hand, in a case where the stop time period is determined to be longer than or equal to the predetermined time period in Step S114, a gravity is calculated from a time-averaged value of the acceleration acquired by the acceleration sensor 111 during the stop (S116), and the initial attitude of the device 100 is calculated from the calculated gravity (S118). When the initial attitude of the device is determined in Step S118, a position of the device 100 at each time is calculated in Step S120, and a process of acquiring a relative track is executed.

In the position calculation process, first, detected values of the acceleration sensor 111 and the gyro sensor 113 are acquired (S121), and an attitude angle is calculated on the basis of the detected value of the gyro sensor 113 (S122) as shown in FIG. 12. Then, an acceleration coordinate system is converted withe the attitude angle calculated in Step S122 and thus a local coordinate system is converted into a global coordinate system (S123). Then, a gravity value is subtracted from an acceleration value detected by the acceleration sensor 111 (S124), then the acceleration from which the gravity value is integrated, and then a movement speed of the user is obtained (S125). In addition, by integrating movement speeds calculated in Step S125, position information can be acquired (S126). The track calculation unit 120 transmits the position information obtained as described above and a time of the position information to the server 200. By executing the position calculation process shown in FIG. 12 with respect to each of times, time series data of the position information, i.e., a relative track, is acquired. Note that the processes shown in FIG. 11 and FIG. 12 are the same as a general inertial navigation computation process, and the relative track may be calculated using another technique.

(3) Absolute position information acquisition process

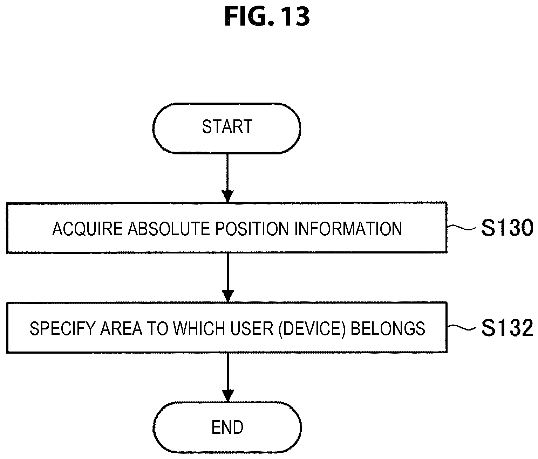

Acquisition of absolute position information performed in the absolute position information acquisition process (S30) of FIG. 10 may be performed through a process shown in, for example, FIG. 13. At this time, an area in which the user is positioned may be specified on the basis of the absolute position information. FIG. 13 is a flowchart showing the absolute position information acquisition process.

Absolute position information is acquired by the absolute position information acquisition unit 130 of the device 100 (S130). The absolute position information includes, for example, positioning information obtained using a GPS, positioning information obtained using Wi-Fi, positioning information obtained from communication with a mobile telephone base station, or the like. The absolute position information can be acquired as long as the device 100 can access each of networks.

In addition, the area determination unit 140 may specify the area in which the device 100 is positioned on the basis of the absolute position information (S132). The area may be specified on the basis of, for example, association information of a pre-set absolute position and the area.

The absolute position information acquired in Step S130 and the area acquired in Step S132 are output to the server 200 via the transmission unit 160. As described above, in the present embodiment, the area specified by using the absolute position information is used as information for avoiding erroneous same position determination. Thus, high determination accuracy is not required for the determination of the area, and thus it is sufficient that an approximate position within a range of about dozens of meters can be specified. Thus, the absolute position information acquisition process can be executed even in an environment in which a measurement error of absolute position information may be significant, and information obtained from the process can be used.

(4) Same position determination process

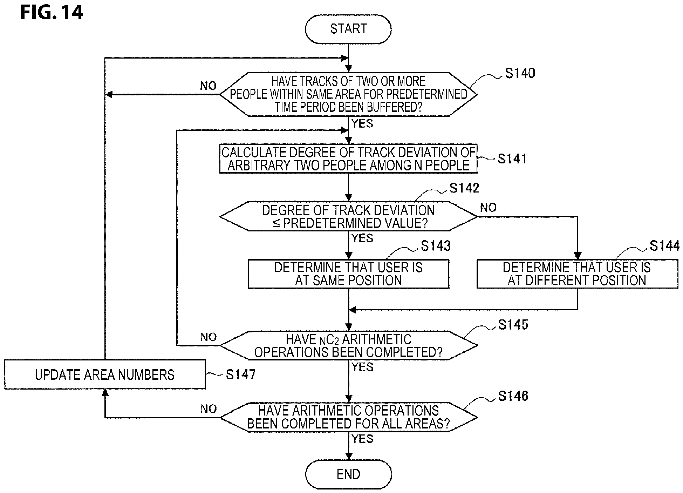

The same position determination process (S40) of FIG. 10 may be performed through, for example, the process shown in FIG. 14. FIG. 14 is a flowchart showing the same position determination process.

The server 200 can execute the same position determination process when relative tracks of two or more people within the same area for a predetermined time period are acquired through the relative track acquisition process (S20) and the absolute position information acquisition process (S30) of FIG. 10 (S140). The same position determination process can be executed at a predetermined timing as long as the same position determination process is ready to be executed.

In the present embodiment, users can be determined to be at the same position by determining a similarity of relative tracks acquired using detected values of the inertial sensors that are not affected by an environment. Here, there may be cases where relative tracks acquired by the device100 of each of users have different scales or azimuths as a whole, and thus values thereof may be hard to compare with each other as they are. With regard to scales, relative tracks may have an error caused by an error in step sizes of users, which may be normally 5% or so. With regard to azimuths, since azimuths of relative tracks are relative azimuths, absolute azimuths thereof do not match each other in general. In addition, in a case where an acquisition time period of relative tracks is too short, it is hard to say that sufficient information for determining a similarity is acquired, and thus it is necessary to acquire relative tracks for a certain period of time. Furthermore, if a similar track obtained at a totally different place is regarded as a track obtained at the same position, it is not possible to perform correct same position determination. Thus, in the present embodiment, relative tracks can be compared with each other with high accuracy by treating the relative tracks as will be described below to perform same position determination.

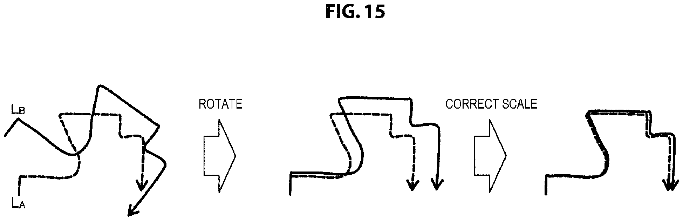

First, a deviation between scales of relative tracks or azimuths of whole tracks is resolved through correction of scales and rotation of tracks. For example, a case where a similarity of two relative tracks $L_A$ and $L_B$ with different scales and azimuths is determined is considered as illustrated on the left side of FIG. 15. In this case, the two relative tracks $L_A$ and $L_B$ can be in a comparable state by performing geometric fitting, like putting the starting points of the tracks together and rotating them to match their azimuths (the center of FIG. 15), and adjusting the scale of one track to the other one (the right side of FIG. 15).

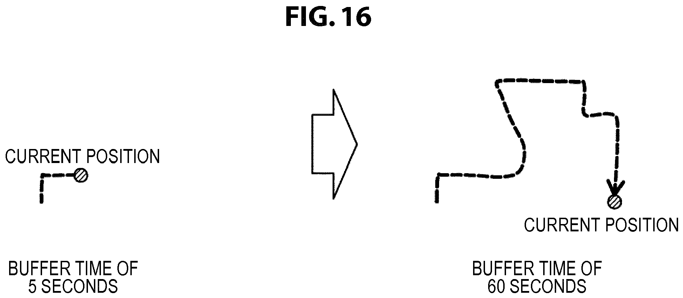

In addition, in order to increase accuracy of same position determination, a certain period of time is necessary for acquiring relative tracks as described above. For example, as illustrated on the left side of FIG. 16, in a case where a buffer time of a relative track is short (e.g., 5 seconds), a track thereof becomes short and there is an increasing possibility of a similar track being obtained at a different place, which deteriorates accuracy of same position determination. In order to distinguish a track from another one obtained at a different place, a certain length of buffer time of a relative track (e.g., 60 seconds) is necessary as illustrated on the right side of FIG. 16. As a buffer time is longer, accuracy of same position determination increases. Meanwhile, it can be said that, if a time for acquiring a relative track is lengthened to increase accuracy of the same position determination process, execution of the same position determination process extends. However, real-time determination can be performed by taking a measure of limiting a determination subject of the same position determination or the like, and there is little time constraint on the same position determination performed for the purpose of data mining, and therefore, an extension of determination of about several days is not a problem. As described above, even if a time for acquiring a relative track is secured to some degree, an extension of the same position determination process is not a problem.

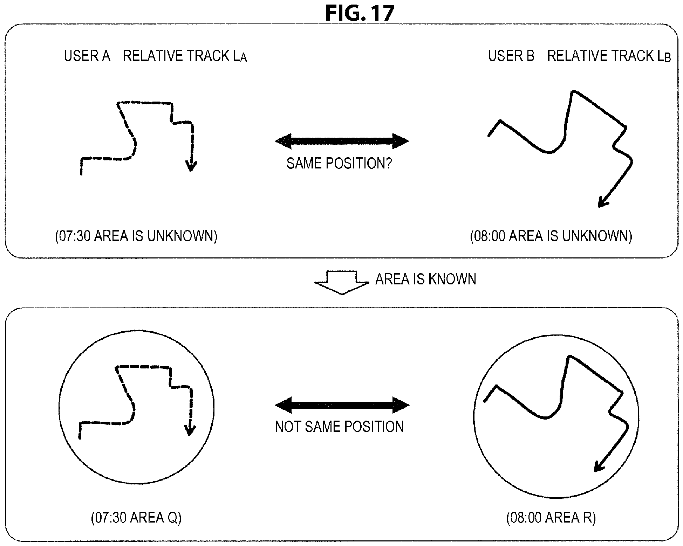

Furthermore, erroneous determination performed in a case where a similar track is obtained at a different place can be handled using, for example, area information. It is assumed that, for example, a relative track $L_A$ of a user A and a relative track $L_B$ of a user B are obtained and the relative tracks $L_A$ and $L_B$ are similar to each other as illustrated in the upper part of FIG. 17. It is highly likely that the user A and the user B can be determined to be at the same position on the basis of only a similarity of the shape of the relative tracks. Thus, the relative tracks acquired in totally different areas can be prevented from being subject to execution of same position determination by determining whether approximate areas from which the relative tracks $L_A$ and $L_B$ are obtained are the same. As described above, the area determination can be performed by comparing approximate areas within a range of dozens of meters, and information thereof can be easily specified using absolute position information acquired by the absolute position information acquisition unit 130 of the device 100. In particular, urban areas are considered to have a sufficient number of Wi-Fi access points and positioning information using Wi-Fi can be easily acquired. In the example of FIG. 17, for example, if it is possible to specify that the relative track $L_A$ of the user A has been acquired in an area Q and a relative track $L_B$ of the user B has been acquired in an area R, the users are not at the same positions, and thus they can be excluded from subjects of the same position determination.

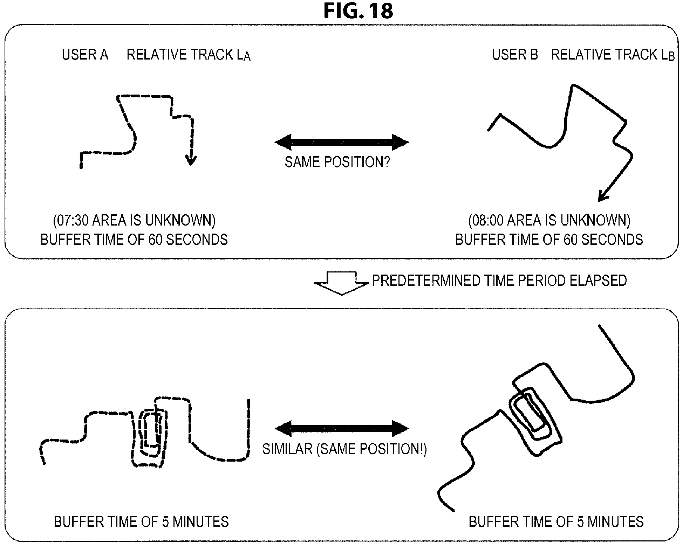

Alternatively, a time for acquiring a relative track can be lengthened to reduce occurrence of erroneous determination performed in a case where a similar track is obtained at a different place. For example, it is assumed that the relative track $L_A$ of the user A and the relative track $L_B$ of the user B are obtained and the relative tracks $L_A$ and $L_B$ are similar to each other as illustrated in the upper part of FIG. 18, as in the FIG. 17. At this time, if a buffer time of the relative tracks are lengthened, accuracy of the same position determination increases, and thus if the relative tracks can be determined to be similar to each other even when the buffer time is lengthened, the users can be said to be at the same position with high accuracy. For example, a buffer time of 60 seconds for each of the relative tracks $L_A$ and $L_B$ shown in the upper part of FIG. 18 is lengthened to five minutes as shown in the lower part of FIG. 18. If the relative tracks $L_A$ and $L_B$ can be determined to be similar to each other even though the buffer time is 5 minutes, the user A and the user B can be determined to be at the same position with high accuracy.

In Step S140 of FIG. 14, subjects of the same position determination are limited to relative tracks acquired in the same area through area determination and to those acquired for a predetermined buffer time (or a buffer time equal to or longer than the buffer time) taking the above-described factors into consideration. Accordingly, accuracy of the same position determination process can be improved.

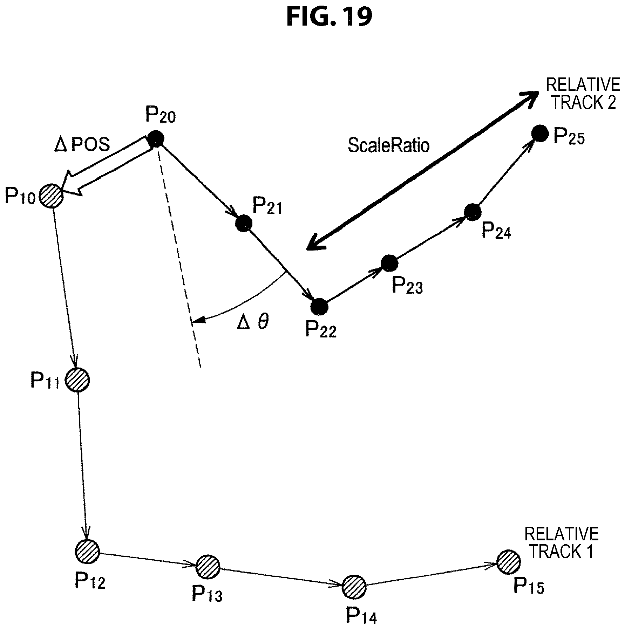

When the same position determination process can be executed in Step S140, the same position determination unit 220 calculates a degree of track deviation for relative tracks of arbitrary two users among N users who are subjects of the same position determination (S141). A degree of track deviation is an index indicating a similarity of a relative track of a same position determination subject. An example of a method for calculating a degree of track deviation will be described below with reference to FIG. 19 to FIG. 27.

It is assumed that there are a relative track 1 and a relative track 2 as relative tracks of same position determination subjects as illustrated in FIG. 19. In this example, each relative track is defined with relative positions and relative azimuths measured at six time points. Here, although the relative tracks formed of six relative positions are employed in order to simplify description, relative tracks specified at about 100 relative positions are compared with each other in practice, for example, in order to increase accuracy of same position determination. In addition, relative positions and relative azimuths of respective users are assumed to be acquired at the same sampling intervals. A degree of track deviation is calculated after data synchronization ($\Delta$POS), azimuth correction ($\Delta\theta$) and scale correction (ScaleRatio) of relative tracks are executed.

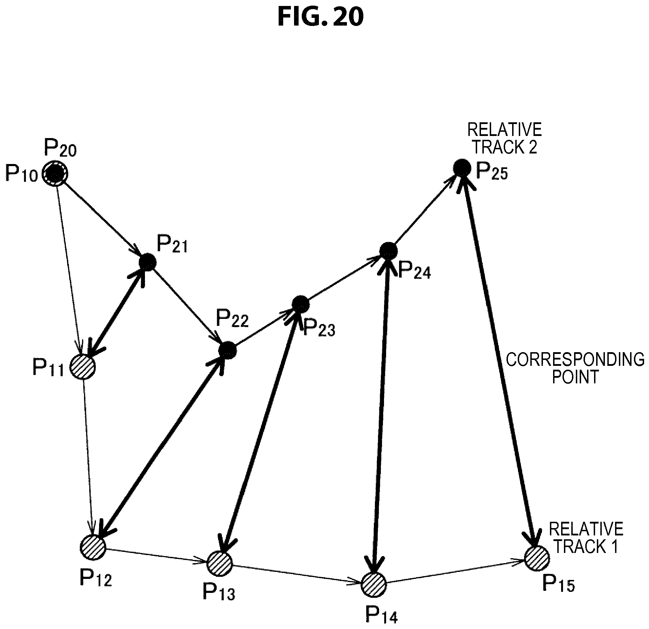

First, the same position determination unit 220 performs data synchronization of the relative tracks in which relative positions of the respective relative tracks are set to correspond to each other. In the correspondence of the relative positions of the respective relative tracks, relative positions $P_{10}$ and $P_{20}$ which are equivalent to starting points of the relative tracks are used as reference positions, and other relative positions $P_{11}$ to $P_{15}$ and $P_{21}$ to $P_{25}$ are correspond to each other on the basis of acquired time points as illustrated in FIG. 20. The corresponding relative positions are also called corresponding points. The relative positions of the respective relative tracks recorded at the same time or times closest to each other may be set as corresponding points. In a case where same position determination for different times, for example, a time of the relative position of any one relative track is offset by a predetermined time period respectively, and then the relative positions of the respective relative tracks recorded at the same time or times closest to each other may be set as corresponding points.

Note that the relative tracks which are same position determination subjects are assumed to be synchronized to be compared with each other. The data synchronization of the relative tracks may be performed in the following process, for example, for time series data acquired as detected values of the sensor unit 110 of each device 100 on the basis of a time series correlation.

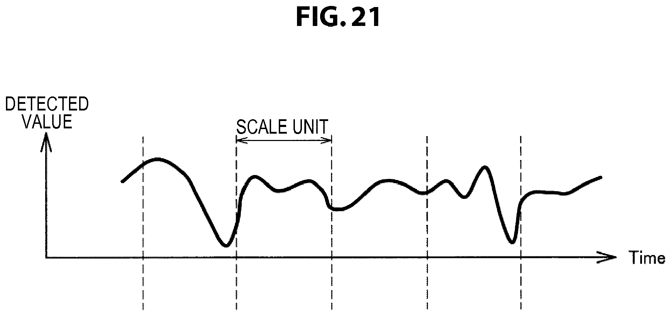

It is assumed that time series data of detected values of the gyro sensor 113 as shown in FIG. 21 are acquired, for example, as the detected values of the sensor unit 110 of the device 100. First, the time series data is compartmentalized for each period which is a unit of scale standardization of relative tracks (which will also be referred to as a "scale unit" below). The scale unit may be set to, for example, about 100 seconds. Next, a waveform of the time series data of the detected values compartmentalized in the scale units is standardized. By standardizing the waveform, a similarity of relative track in the same scale can be determined. The standardization of the waveform may be performed by changing a scale ratio of a time axis and a detected value axis on the basis of the following relationship such that time integrated values of waveforms before and after the standardization are constant, for example, for each waveform of the scale unit.

$$\text{Scale ratio (time axis)} = \text{Period-averaged speed of user/fixed speed}$$

$$\text{Scale ratio (detected value axis)} = 1/\text{scale ratio (time axis)}$$

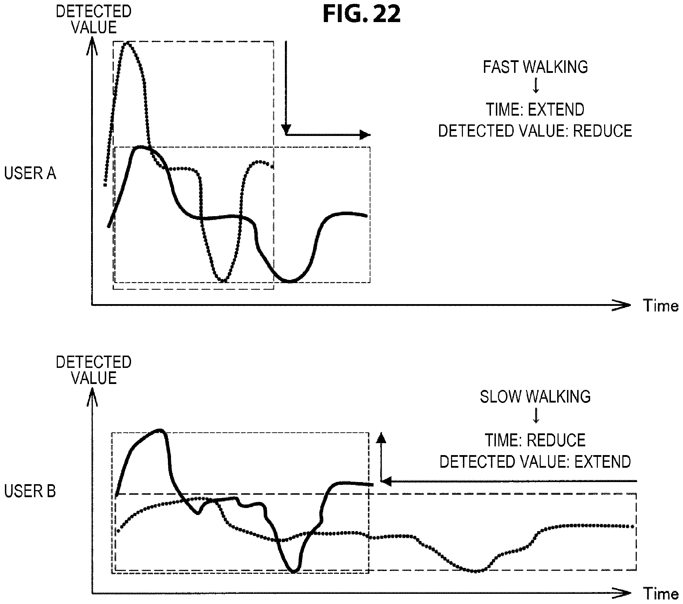

For example, time series data of detected values acquired by the gyro sensor 113 of the devices 100 of the users A and B is considered as illustrated in FIG. 22. The time series data indicted by the dotted lines indicates a part of the waveform (the original waveform) of the time series data of the detected values compartmentalized in the scale unit. Since the user A has a fast walking speed in the example of FIG. 22, the original waveform of the user A has a shape that is short in the direction of the time axis and long in the direction of the detected value axis. On the other hand, since the user B has a slow walking speed, the original waveform of the user B has a shape that is long in the direction of the time axis and short in the direction of the detected value axis. By standardizing the original waveforms with respect to the time axis and the detected value axis, the original waveform of the user A extends in the direction of the time axis and reduces in the direction of the detected value axis, the original waveform of the user B reduces in the direction of the time axis and extends in the direction of the detected value axis, and thus the waveforms thereof are converted respectively into the waveforms indicated by the solid lines.

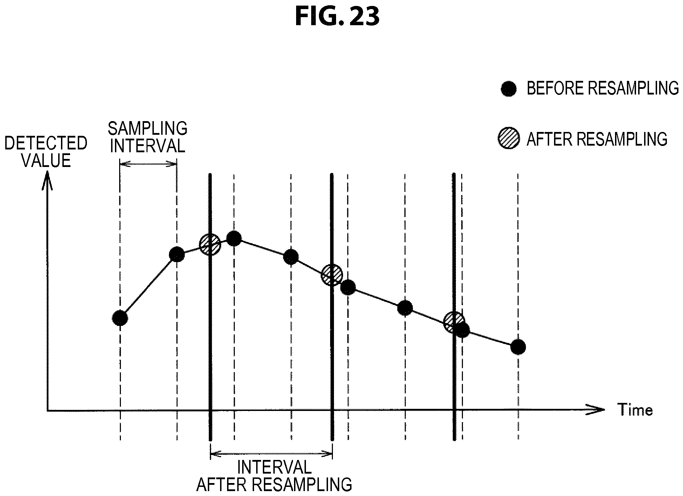

Here, when the time axis is standardized, a sampling interval that was the same is changed, and thus the sampling interval is resampled to a predetermined interval set in advance. Resampling may be performed using linear interpolation or the like. In a case where an original waveform extends in the direction of the time axis like the one of the user A of FIG. 22, for example, a predetermined interval after resampling becomes longer than a sampling interval in which a value of an initial original waveform is acquired as illustrated in FIG. 23, and thus a detected value in the predetermined interval is set through linear interpolation or the like.

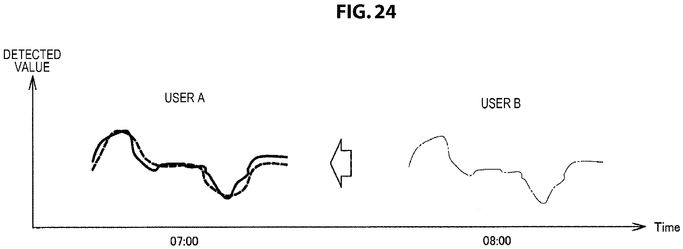

Then, time shift correction for correcting a deviation between absolute times of respective relative tracks is performed. For example, it is assumed that a time at which time series data of detected values of the user A is acquired is 7:00 and a time at which time series data of detected values of the user B is acquired is 8:00 as illustrated in FIG. 24. In this case, with reference to the time at which the detected values of any one user are acquired, the time series data of the detected values of the other user is shifted by a predetermined time period. The time by which the time series data is shifted (a shift amount) may be decided by, for example, searching for a value at which a degree of waveform deviation expressed by the following formula is the minimum. At this time, only detected values measured at times at which the users in the same area, for example, may be search objects in order to narrow down a search range.

$$\text{Degree of waveform deviation} = \Sigma((\text{Sensor detected value}_{\text{user A}}) - (\text{Sensor detected value}_{\text{user B}}))^2/m$$

m: the number of detected values included in a scale unit after resampling

Note that, although the minimum value of the degree of waveform deviation is a small value in a case where the user A and the user B are at the same position, the minimum value is a large value in a case where the user A and the user B are at different positions. That is, same position determination for the users can also be performed on the basis of a degree of waveform deviation.

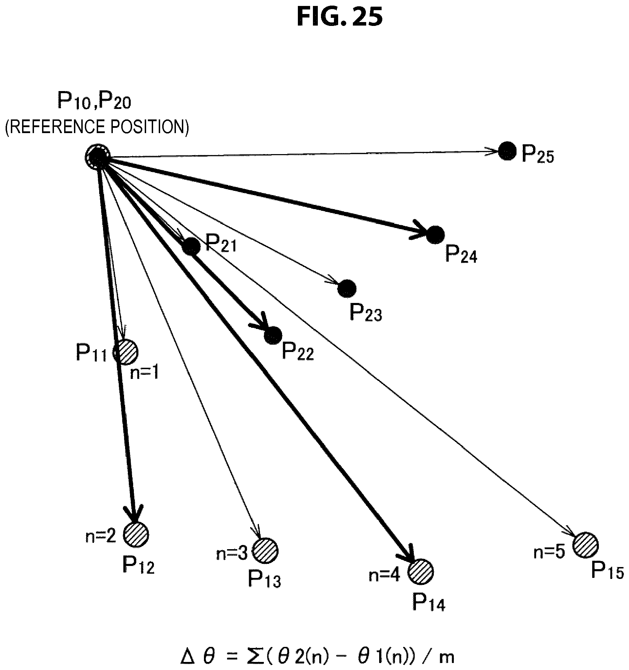

After data synchronization of the relative tracks is performed through the above-described process, the relative positions of the relative tracks are set to correspond to each other, and thereby a correspondence relationship of the relative positions is obtained as illustrated in, for example, FIG. 20. Next, correction of azimuths of the relative tracks is performed. In the correction of azimuths, first, azimuth angles $\theta1(n)$ and $\theta2(n)$ of the relative positions $P_{11}$ to $P_{15}$ and $P_{21}$ to $P_{25}$ viewed from the reference positions $P_{10}$ and $P_{20}$ are calculated, n is a value given in the order in which the relative positions are acquired having the reference positions set to 0. With respect to the relative tracks, relative positions having the same n values are in the relationship of corresponding points. For example, an azimuth angle of the relative position $P_{11}$ viewed from the reference position $P_{10}$ is $\theta1(1)$ as illustrated in FIG. 25. Then, a sum average value of the differences between the azimuth angles $\theta1(n)$ and $\theta2(n)$ of the relative positions is calculated, and it is set to an azimuth correction quantity $\Delta\theta$. That is, the azimuth correction quantity $\Delta\theta$ is expressed using the following formula.

$$\Delta\theta = \Sigma(\theta2(n) - \theta1(n))/m$$

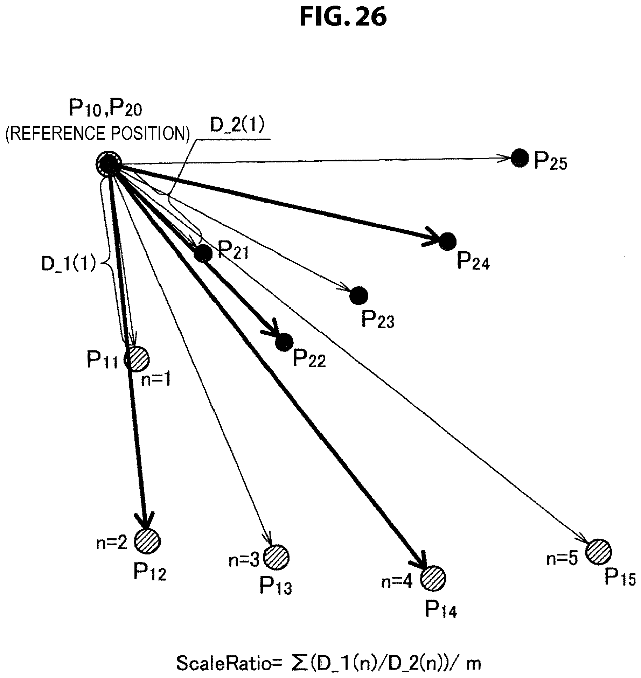

After the azimuth correction is performed, scale correction of the relative tracks is performed. In the scale correction, first, distances $D\_1(n)$ and $D\_1(2)$ between the reference position and the respective relative positions are calculated. For example, the distance between the reference position $P_{10}$ and the relative position Pn is $D\_1(1)$ and the distance between the reference position $P_{20}$ and the relative position $P_{21}$ is $D\_2(1)$ as illustrated in FIG. 26. Then, ratios of corresponding points of the respective relative tracks are obtained, then the average value of the added sum of the ratios is set to a scale correction value ScaleRatio. The scale correction value ScaleRatio is expressed using the following formula.

$$\text{ScaleRatio} = \Sigma(D\_1(n)/D\_2(n))/m$$

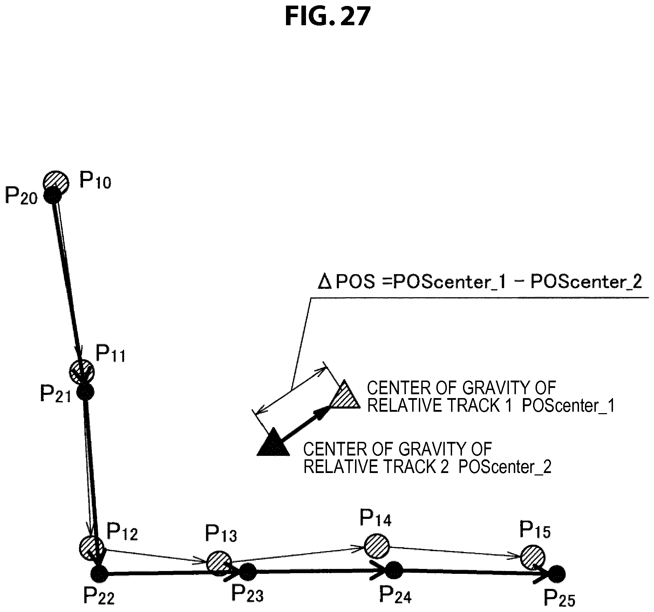

After the azimuth correction and the scale correction are performed, the same position determination unit 220 performs position correction of the relative tracks. There can be cases in which, even though positions of the starting points (a time of 0) of the relative tracks are matched, average positions of whole tracks may be deviated. Thus, the centers of gravity of the respective relative tracks 1 and 2 are calculated using their relative positions, the difference between the centers of gravity is set as a position correction quantity $\Delta$POS of the relative tracks, and then any one relative track is shifted by the position correction quantity $\Delta$POS as a whole. A center of gravity of a relative track may be expressed with, for example, an average value of relative positions included in the relative track. When a center of gravity of the relative track 1 is set to $\text{POS}_{\text{center\_1}}$ and a center of gravity of the relative track 2 is set to $\text{POS}_{\text{center\_2}}$, for example, as illustrated in FIG. 27, the difference of the centers of gravity of the tracks is a position correction value $\Delta$POS. In addition, by shifting any one relative track (e.g., the relative track 2) toward the other one (the relative track 1), the positions of the relative tracks are corrected.

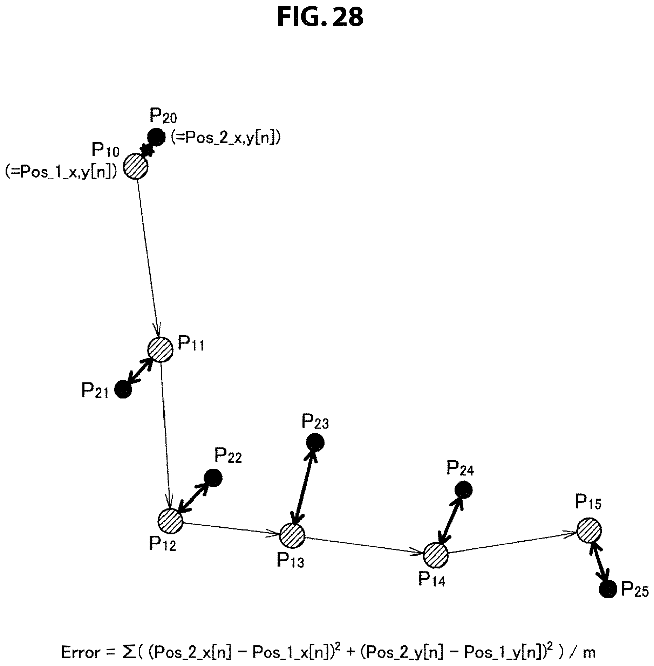

When the data synchronization of the relative tracks ($\Delta$POS), azimuth correction ($\Delta\theta$), and scale correction (ScaleRatio) are executed as described above, differences in distances of the respective relative tracks are in a minimized state. In the state, mean squares of distances between corresponding points of respective relative tracks are acquired, the average of the mean square is set to a degree of track deviation of the relative tracks as illustrated in FIG. 28. That is, in the present embodiment, the degree of track deviation is calculated using least square error, and the degree of track deviation Error is expressed using the following formula.

$$Error = \Sigma((Pos\_2\_x[n] - Pos\_1\_x[n])^2 + (Pos\_2\_y[n] - Pos\_1\_y[n])^2)/m$$

As described using FIG. 14, when the degree of track deviation is calculated in Step 141, the same position determination unit 220 determines whether the degree of track deviation is equal to or lower than a predetermined value (S142). In a case where the degree of track deviation is determined to be equal to or lower than the predetermined value in Step S142, the user is determined to be at the same position (S143). On the other hand, in a case where the degree of track deviation is determined to be greater than the predetermined value in Step S142, the user is determined to be at a different position (S144). Then, when the same position determination for the two users of this time is completed, it is checked whether the same position determination process has been completed for all combinations of all users who are subjects of the same position determination (S145), and in a case where there are users in a combination that has not been determined yet, the processes from Step S141 are repeated.

On the other hand, in a case where the same position determination is completed for the combinations of all users, it is checked whether the same position determination process can be executed for another area (S146), and if there is an area that has not been determined yet, area numbers set for respective areas are updated (S147), and the processes from Step S140 are repeated. Then, when there is no information that is subject to the same position determination process, the same position determination unit 220 ends the process shown in FIG. 14. The same position determination process according to the present embodiment has been described above.

(1.4. Social attribute specification process)

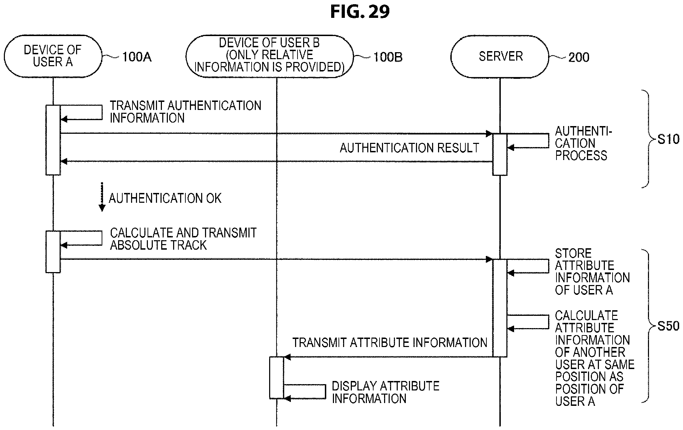

The social attribute specification process of specifying a social attribute of a plurality of users who have been determined to have some kind of relevance in the above-described same position determination process will be describe with reference to FIG. 29. FIG. 29 is a sequence diagram showing a flow of a process of the information processing system 1 when a social attribute specification process for a plurality of users is executed. Here, a case where the user A and the user B are determined to have some kind of relevance and a social attribute of a user B is specified by specifying a social attribute of the user A will be described.

The social attribute specification process starts from a user authentication process using a device communicating with the server 200 (S10). For example, when authentication information is transmitted from a device 100A of the user A to the server 200, the server 200 executes the authentication process on the basis of the authentication information and transmits an authentication result to the device 100A. In FIG. 29, although only the authentication process for the user A is illustrated, the authentication process is executed similarly for the user B. In a case where authentication has been performed, the device 100A, a device of the user B, and the server 200 execute the process of Step S50.

After authentication is performed using the authentication information, the device 100A of the user A is assumed to acquire absolute position information by using the absolute position information acquisition unit 130 to acquire an absolute track of the user A. The absolute track is output to the server 200 via the transmission unit 160. The server 200 that has received the absolute track records information corresponding thereto in the acquired data storage unit 250. In addition, the attribute specification unit 230 specifies a social attribute of the user B who has relevance to the user A on the basis of the absolute track of the user A. For example, relevance that the user A and the user B move passing through a "certain common route" is assumed to be known as illustrated in FIG. 4. At this time, the attribute specification unit 230 specifies an absolute position of the common route on the basis of an acquired absolute track of the user A. In addition, in a case where there is information of the user B regarding another route connected to the common route, the attribute specification unit 230 may also specify an absolute position of the routes. As described, the attribute specification unit 230 specifies a social attribute of the user B for whom only relative information has been provided.

Then, the server 200 may transmit a result of the social attribute specification process to a device 100B of the user B if necessary. The device 100B which has received the result of the social attribute specification process may inform the user of a determination result by, for example, displaying the result on a display unit.

The information processing system 1 according to the first embodiment, the same position determination process for a plurality of users performed in the system, and the social attribute specification process of specifying a social attribute of the users who are determined to have some kind of relevance to each other in the same position determination process have been described above. According to an embodiment of the present disclosure, the same position determination process is performed on the basis of a relative track obtained using the inertial sensors that are not affected by an environment. Accordingly, same position determination can be executed with high accuracy without being affected by an environment, and detected values used in the same position determination can also be easily acquired from sensors mounted in versatile devices. Furthermore, with respect to a social attribute of a plurality of users who are determined to have some kind of relevance to each other, a social attribute of one user is specified in the same position determination process, and thus a social attribute of another user can also be specified, and an absolute value of the social attribute of the user can be easily specified.

<2. Second embodiment

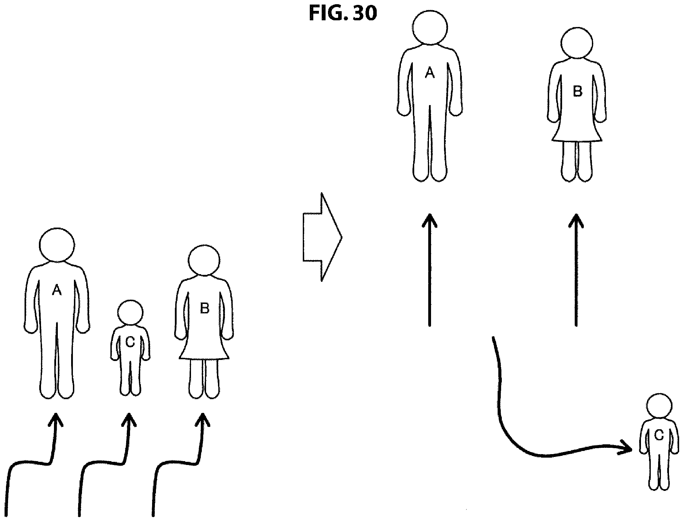

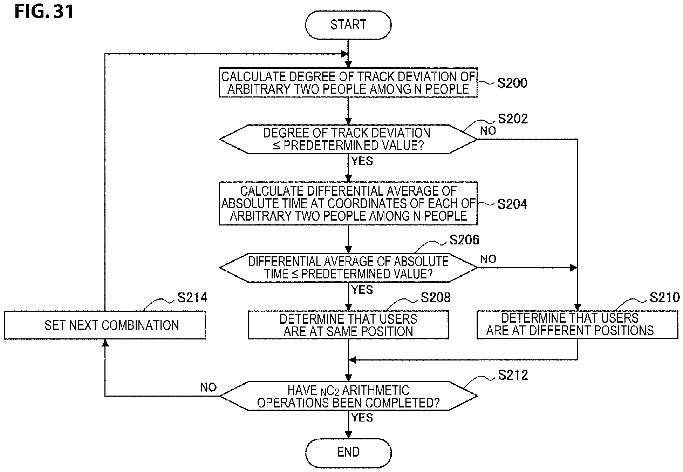

Next, a second embodiment of the present disclosure will be described with reference to FIG. 30 and FIG. 31. In the present embodiment, a case where a device that is subject to the same position determination process is limited and same position determination is performed in real time will be described. Since a system configuration and process details of the present embodiment are basically the same as those of the first embodiment, detailed description thereof will be omitted.

In real-time same position determination, for example, subjects for which same position determination is performed is limited to a small number like family members including a father A, a mother B, and a child C as illustrated in FIG. 30. Although movement tracks of all the members are similar in a case where the father A, the mother B, and the child C are at the same position as illustrated on the left side of FIG. 30, in a case where a movement track of the child C is different from those of the father A and the mother B as illustrated on the right side of FIG. 30, the child C can be specified to be separated from the father A and the mother B. In this case, although same position determination has to be performed in real time, a real-time property of a process can be ensured by limiting subjects of same position determination to a small number.

Specifically, the same position determination process is performed in real time through the process shown in FIG. 31. Real-time same position determination is periodically repeated at predetermined determination timings. FIG. 31 shows the same position determination process executed one determination timing, and the same determination process is assumed to be executed at every determination timing.

First, the same position determination unit 220 calculates a degree of track deviation of relative tracks of arbitrary two users among N users who are subject to same position determination (S200). The degree of track deviation is an index indicating a similarity of relative tracks of subjects of same position determination as described in the first embodiment, and is expressed with, for example, the least square error of each of relative positions of the relative tracks to be compared. The same position determination unit 220 determines whether the degree of track deviation is equal to or lower than a predetermined value (S202). In a case where the degree of track deviation is determined to be greater than the predetermined value in Step S202, the users are determined to be at different positions (S210).

On the other hand, in a case where the degree of track deviation is determined to be equal to or lower than the predetermined value in Step S202, a differential average value of absolute times of the relative positions is calculated for the two users (S204). It is important in the present embodiment for users to be present at the same position at the same time. Thus, similar tracks are determined to be produced at the same timing using a differential average value of absolute times. In a case where the differential average value of the absolute times is equal to or smaller than a predetermined time in Step S206, the two users are determined to be present at the same position at the same time (S208). On the other hand, in a case where the differential average value of the absolute times is greater than the predetermined time in Step S206, the users are determined to be present at different positions (S210).

Then, when the same position determination for the two users of this time is completed, it is checked whether the same position determination process is completed for all combinations of all users who are subject to same position determination (S212), the next combination is set in a case where there are users in a combination that has not been determined (S214), and processes from Step S200 are repeated. In the case where same position determination has been completed for all of the user combinations, the same position determination unit 220 ends the process of FIG. 31.

The real-time same position determination process according to the present embodiment has been described above. In the real-time same position determination process, whether a plurality of users are together can be ascertained. Note that, in the same position determination process of FIG. 30 for a parent and a child, a buffer time of relative tracks to be used in determination can be set to be shorter (e.g., about 10 seconds) if it is desired to specify separation of a child from his or her parent earlier. Meanwhile, in a case of low urgency like a case where it is desired to determine whether a child who was separated has met the family again or the like, a buffer time of relative tracks to be used in determination of FIG. 31 may be set to be longer (e.g., about 30 seconds). As described above, a buffer time of relative tracks to be used in determination may be changed in accordance with content of same position determination.

<3. Third embodiment

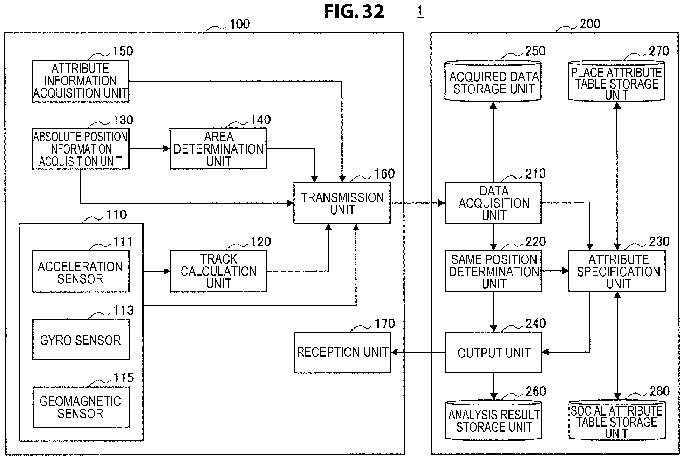

Next, a third embodiment of the present disclosure will be described with reference to FIG. 32 to FIG. 40. In the present embodiment, a behavior of users who have determined to be at the same position in the same position determination process is specified using information regarding stay times of the users at the position. In this case, a place attribute table in which information regarding stay times is set on the basis of tendencies of user behaviors is used. By using the place attribute table, a stay position of a user can be specified without measuring the position with high accuracy. A user behavior specification process performed by an information processing system according to the present embodiment will be described below. Note that detailed description of the same system configuration and process details of the present embodiment as those of the first embodiment will be omitted.

(3.1. Configuration of information processing system)

FIG. 32 shows an example of a configuration of an information processing system 1 according to the present embodiment. FIG. 32 is a functional block diagram illustrating a configuration of the information processing system 1 according to the present embodiment.

The information processing system 1 according to the present embodiment includes a device 100 held by a user and a server 200 which executes the same position determination process and the attribute specification process on the basis of information acquired by the device 100 as illustrated in FIG. 32. Although only one device 100 is illustrated in FIG. 32 as in the first embodiment, the server 200 is connected to devices 100 each held by a plurality of users. The server 200 executes the same position determination process and the attribute specification process on the basis of data received by the plurality of devices 100.

(1) Device

The device 100 is an information processing terminal held by user, such as a smartphone, a wearable terminal, or the like. The device 100 includes a sensor unit 110, a track calculation unit 120, an absolute position information acquisition unit 130, an area determination unit 140, an attribute information acquisition unit 150, a transmission unit 160, and a reception unit 170 as illustrated in FIG. 32. Since the device 100 illustrated in FIG. 32 has the same configuration and the same functions as those of the first embodiment, description thereof will be omitted here.

(2) Server

The server 200 performs same position determination for determining whether users are (or have been) at the same position on the basis of information input from the device 100 of each of the users. In addition, the server 200 according to the present embodiment executes a process of specifying behaviors of users who have been determined to be at the same position in the same position determination process. The server 200 may also execute a social attribute specification process for specifying social attributes of users. The server 200 includes a data acquisition unit 210, a same position determination unit 220, an attribute specification unit 230, an output unit 240, an acquired data storage unit 250, an analysis result storage unit 260, a place attribute table storage unit 270, and a social attribute table storage unit 280 as illustrated in FIG. 32.

The data acquisition unit 210 receives various kinds of information from a plurality of devices 100 that can communicate with the server 200. The data acquisition unit 210 acquires detected values of each of sensors of the sensor unit 110 or relative tracks of users calculated by the track calculation unit 120, absolute position information acquired by the absolute position information acquisition unit 130, and area information specified by the area determination unit 140. The aforementioned information is used in the same position determination process and output to the same position determination unit 220. In addition, the data acquisition unit 210 can also acquire a social attribute of a user acquired by the attribute information acquisition unit 150 or information with which the social attribute can be specified. The information is output to the attribute specification unit 230. Furthermore, the data acquisition unit 210 may also record various kinds of acquired information in the acquired data storage unit 250.

The same position determination unit 220 determines users being at the same position. The same position determination unit 220 according to the present embodiment determines a similarity of relative tracks of users and determines whether the users are at the same position. The same position determination unit 220 may function as a function unit serving as a synchronization processing unit which synchronizes data of same position determination subjects, a deviation degree calculation unit which calculates a degree of deviation of synchronized time series data, and a determination processing unit which performs same position determination of users on the basis of the calculated degree of deviation. Note that, since the same position determination process by the same position determination unit 220 is the same as that of the first embodiment, description thereof will be omitted here. The same position determination unit 220 outputs a determination result to the output unit 240. The same position determination unit 220 may output the determination result to the attribute specification unit 230.

The attribute specification unit 230 specifies behaviors of users who have been determined to have some kind of relevance to each other since they have been determined to be at the same position in the same position determination process. In the present embodiment, the attribute specification unit 230 calculates place attribute information including information regarding stay times of the users at the position at which they stay. Then, the attribute specification unit 230 specifies behaviors of the users on the basis of the calculated place attribute information and a place attribute table recorded in the place attribute table storage unit 270 which will be described below. In addition, the attribute specification unit 230 may specify a social attribute of the users on the basis of a social attribute table recorded in the social attribute table storage unit 280 which will be described below.

Furthermore, the attribute specification unit 230 can also specify behaviors of all relevant users on the basis of details of a behavior acquired for at least one user or information with which a behavior can be specified, as in the first embodiment. Likewise, the attribute specification unit 230 can also specify social attributes of all relevant users on the basis of a social attribute acquired for at least one user and information with which a social attribute can be specified. The attribute specification unit 230 can update the place attribute table or the social attribute table on the basis of the information acquired from the users. The attribute specification unit 230 may output the specified behaviors or social attributes of the users to the output unit 240.

The output unit 240 transmits information to the device 100 connected to the server 200. The output unit 240 may output, for example, a determination result of the same position determination unit 220, a behavior or social attribute of a user specified by the attribute specification unit 230 to the device 100 of a user who is a notification target. In addition, the output unit 240 may record a processing result of the server 200 in the analysis result storage unit 260.

The acquired data storage unit 250 is a storage unit which stores various kinds of information acquired from each device 100. The analysis result storage unit 260 is a storage unit which stores processing results of the server 200. Information retained in the storage units can also be used in data mining and the like.

The place attribute table storage unit 270 stores the place attribute table in which information regarding stay times is set in accordance with places or behaviors. In the place attribute table, for example, a stay time at which a user conducted a behavior and a stay time period in which the user stayed to conduct the behavior when the user conducted the behavior are set as the information regarding stay times. For example, in a place attribute table for lunch, stay times can be set to 12 to 13 o'clock and stay time periods can be set to 10 to 30 minutes. The attribute specification unit 230 specifies a place attribute table in which place attribute information of users matches with reference to the place attribute table storage unit 270. Accordingly, a behavior of a user at a place in which the user is staying can be specified.

The social attribute table storage unit 280 stores a social attribute table set on the basis of stay times and stay time periods. In a case where there are users who have different stay times or stay time periods at the same place, social attributes of the users are considered to be different from each other. In a restaurant, for example, a user with a stay time of 12 to 13 o'clock and a stay time period of 10 to 30 minutes can be estimated to be a customer who has lunch at the restaurant. On the other hand, a user with a stay time from 9 to 15 o'clock and a stay time period of about 6 hours can be estimated to be a staff member of the restaurant. In the social attribute table, general information for specifying social attributes of users using stay times and stay time periods is set. The attribute specification unit 230 specifies a social attribute table in which place attribute information of users matches with reference to the social attribute table storage unit 280. Accordingly, a social attribute of a user can be specified.

The configuration of the information processing system 1 according to the present embodiment has been described above. Note that, although the one server 200 is set to execute the same position determination process and the attribute specification process in the present embodiment, the present disclosure is not limited thereto. The same position determination process and the attribute specification process may be executed by different servers, or at least any one of the processes can be executed by the device 100.

(3.2. Behavior specification process using place attribute table)

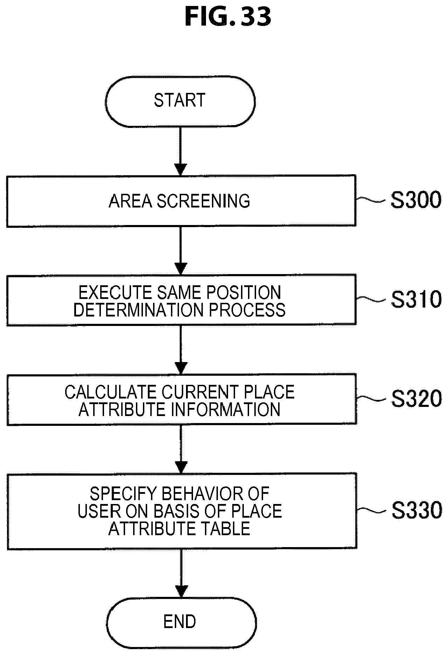

A behavior specification process using a place attribute table according to the present embodiment will be described with reference to FIG. 33. FIG. 33 is a flowchart showing a behavior specification process using a place attribute table according to the present embodiment. In the behavior specification process using a place attribute table according to the present embodiment, place attribute information of a plurality of users who are staying (have stayed) at the same position with respect to place and the place attribute table are compared to specify behaviors of the users.

(1) Area screening

First, screening of an area in which users are staying is performed to specify users staying at the same position (S300). Through the area screening, users who have similar tracks but are in different areas are excluded and thus accuracy of the same position determination process which will be described below is improved. The area screening may be performed by, for example, the area determination unit 140 of the device 100 by executing the process of Step S132 of FIG. 13 as in the first embodiment. High determination accuracy is not required in area determination, and an approximate position within a range of about dozens of meters can be specified using, for example, Wi-Fi or a GPS. The area determination unit 140 outputs a determined area to the transmission unit 160.

(2) Same position determination process

Next, users who are at the same position among the users who have been determined to be in the same area in the area screening are specified by the same position determination unit 220 (S310). The same position determination unit 220 determines a similarity of relative tracks of each of the users and determines whether the users are at the same position. The same position determination process is performed using relative tracks of the users for a predetermined time period calculated on the basis of PDR, an inertial navigation computation process, or the like. The relative tracks are assumed to be calculated on the basis of, for example, the relative track calculation process shown in FIG. 12. The same position determination unit 220 compares the relative tracks on the basis of, for example, the same position determination process shown in FIG. 14 to determine users who are at the same position, as in the first embodiment. The same position determination unit 220 outputs a determination result to the output unit 240. Note that the determination result may be output to the attribute specification unit 230.

Note that the same position determination process can be performed on the basis not only of a similarity of the relative tracks but also of absolute position information gained using a communication technology which enables absolute position information of users to be gained with high accuracy, for example, if the communication technology is widely used. In addition, it is also possible to perform same position determination on the basis of a result gained through a combination of PDR and map matching.

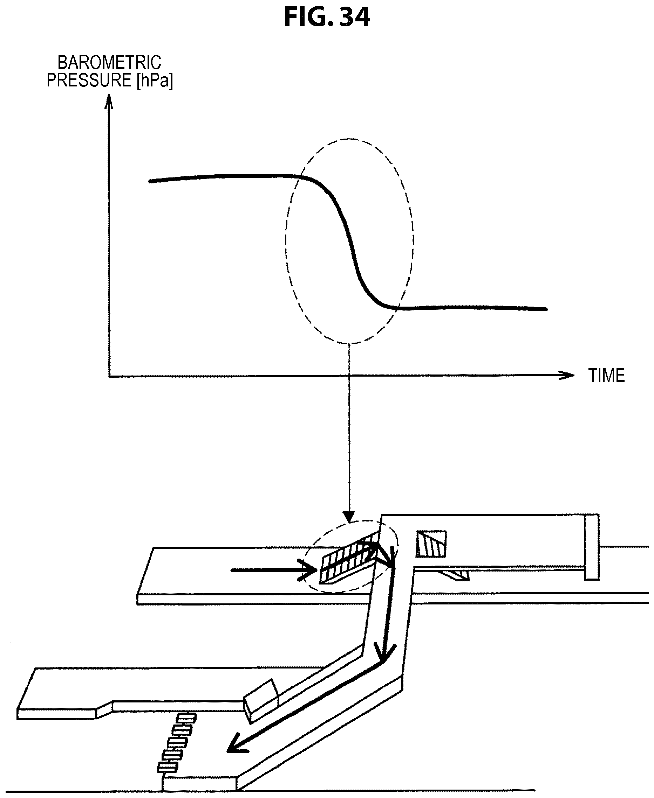

In addition, in a case where a barometric sensor is provided in the sensor unit 110 of the device 100 when relative tracks are acquired, altitude can be estimated, and thus a three-dimensional track of a user also including floor movement can also be detected. For example, when a user walks up steps from a platform to a passageway of a station as illustrated in FIG. 34, barometric pressure measured by a barometric sensor provided in the device 100 decreases. A precise relative track can be acquired using a change of the measured barometric pressure, and thus accuracy of the same position determination process can be improved.

(3) Place attribute specification process and behavior specification process

When users who are at the same position are specified, the attribute specification unit 230 calculates place attribute information of the user who are at the same position (S320), and behaviors of the users are specified (S330). The attribute specification unit 230 specifies place attributes of the users on the basis of information regarding stay times of the users with reference to the place attribute table storage unit 270 and thus behaviors of the users are specified. In the present embodiment, information desired to be acquired using the place attribute table is context information associated with places, for example, information of users who are "shopping," "eating," or "at a café," rather than absolute position information of the users. Thus, the place attribute table is not limited to be used for specify users who are staying at specific places, and used to specify behaviors of users or places in which the behaviors are performed.

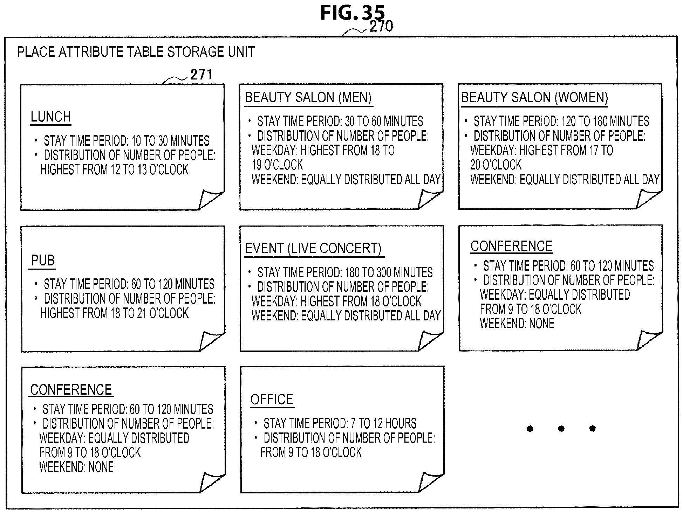

The place attribute table recorded in the place attribute table storage unit 270 is set for each place in which a certain behavior is performed on the basis of stay times of a plurality of users. A place attribute table for specifying one having lunch, for example, may be appropriately set on the basis of user behavior data of the past OR set by an operator of a system. Specifically, the place attribute table storage unit 270 stores one or a plurality of place attribute tables 271 as shown in FIG. 35. In the place attribute tables 271 shown in FIG. 35, distribution of the number of people at times at which corresponding behaviors are performed and stay time periods are set.

In the place attribute table for specifying having lunch, for example, distribution of the number of people at times has a peak at 12 to 13 o'clock and a stay time period is set to 10 to 30 minutes. In addition, a place attribute table for specifying staying in a beauty salon, for example, may be set for each sex because men and women have different tendencies in distribution of the number of people at times and stay time periods. In a case with regard to distribution of the number of people at times where tendencies are shown differently in weekdays and holidays like in the place attribute table for specifying staying at a beauty salon or a place attribute table for specifying being in conference shown in FIG. 35, or the like, distribution of the number of people at times may be set in accordance with dates. In addition to distribution of the number of people at times and stay time periods, for example, a ratio of a cumulative number of people to an actual number of people of one day who perform such a behavior (i.e., a frequency of users performing the behavior) or the like may be set in the place attribute tables.

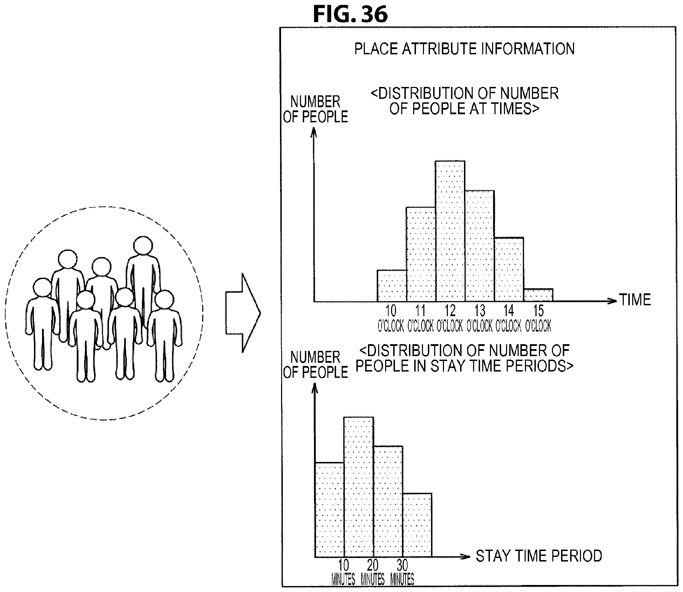

In Step S320, distribution of the number of people at times and distribution of the number of people in stay time periods are calculated on the basis of stay times at the position of the users who have been determined to be at the same position in Step S310. The attribute specification unit 230 calculates the distribution of the number of people at times and distribution of the number of people in stay time periods for the plurality of users who are at the same position on the basis of time information at the position as place attribute information of the users as illustrated in, for example, FIG. 36.

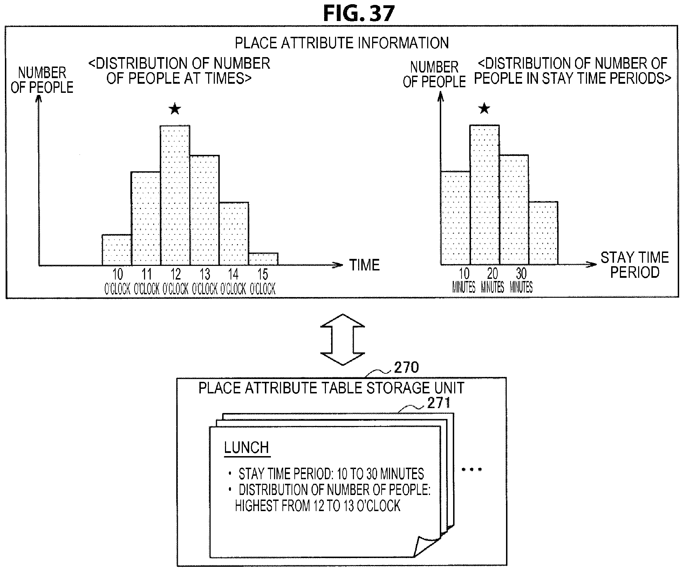

Then, the attribute specification unit 230 specifies one place attribute table 271 which matches the calculated place attribute information with reference to the place attribute table storage unit 270 and specifies behaviors of the users (S330). The attribute specification unit 230 may specify a peak value of the place attribute information to match the value with the place attribute table. The place attribute information of users illustrated in FIG. 37, for example, has a peak value at 12 o'clock in distribution of the number of people at times and a peak value between 10 to 20 minutes in distribution of the number of people in stay time periods. The attribute specification unit 230 compares the peak values with the distribution of the number of people at times and in stay time periods set in the place attribute table 271. Then, when the peak value satisfies a value set in the place attribute table 271, for example, the attribute specification unit 230 determines that the users satisfy place attributes set in the place attribute table. In the example of FIG. 37, place attribute information is matched with the place attribute table for specifying having lunch in which the peak time is between 12 to 13 o'clock and the peak stay time period is between 10 to 30 minutes, and therefore the users can be specified as having lunch.

By using the place attribute table 271 as described above, a behavior of users who are at the same position can be specified. The attribute specification unit 230 may output the specified behavior to the output unit 240.

Although the behavior of the users is specified through comparison of the place attribute information and the place attribute table of the users in Step S330, a behavior of users may be specified on the basis of, for example, information regarding a behavior publicized by one user who is at the same position on an SNS or the like, as in the first embodiment. In addition, since information regarding a behavior publicized by a user is more accurate information than a behavior of a user presumed on the basis of a place attribute table, a place attribute table for specifying a corresponding behavior may be updated on the basis of information publicized by a user.

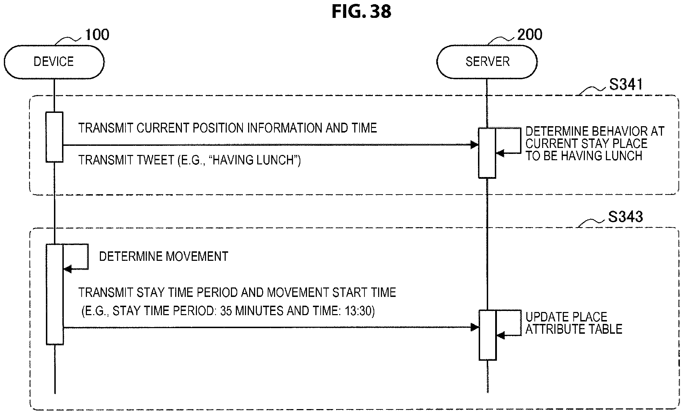

Specifically, for example, the process of FIG. 38 may be executed instead of Steps S320 and S330 of FIG. 33, then a behavior of users who are at the same position may be specified, and a place attribute table may be updated. That is, it is assumed that, in a state in which users who are at the same position are specified by performing same position determination, one of the users at the position has tweeted that he or she is having lunch on an SNS or the like as shown in FIG. 38. The device 100 of the user transmits information that he or she is having lunch to the server 200 along with information of a current position and a time (S341). The server 200 determines that a current behavior of the user is having lunch at the stay position on the basis of the information received from the device 100.

Then, when detecting a start of movement of the user from the staying place, the device 100 transmits a movement start time of the user at the staying place to the server 200 (S343). A movement start determination process may be performed on the basis of, for example, a detected value of the acceleration sensor 111 as in Steps S106 and S108 of FIG. 11. When a start of movement of the user is detected, the device 100 transmits a stay time period at the staying place and the movement start time to the server 200. The data acquisition unit 210 of the server 200 outputs the information received from the device 100 to the attribute specification unit 230. For example, as shown in FIG. 38, information of a stay time period of 35 minutes and a movement start time of 13:30 is transmitted from the device 100 to the server 200. The attribute specification unit 230 updates information of the place attribute table 271 for specifying having lunch on the basis of the aforementioned information.

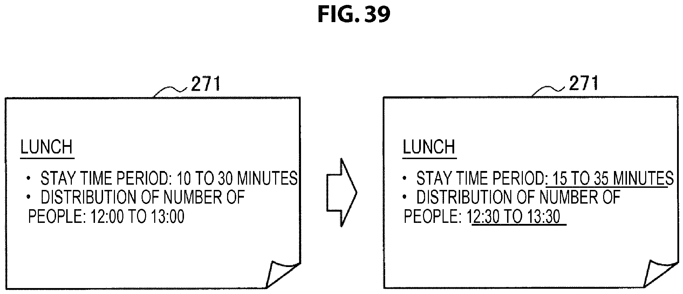

Although updating of the place attribute table 271 may be performed on the basis of information of one user, if updating is performed on the basis of a statistical result of information of a plurality of users, influence of irregularity in behaviors of the users can be reduced, and the place attribute table 271 can be updated conforming to an actual situation. The attribute specification unit 230 changes a tendency of distribution of the number of people at times and a stay time period on the basis of a statistical result of information publicized by a user as in, for example, FIG. 38 and updates the place attribute table 271 as shown in FIG. 39.

(4) Social attribute determination process

Although a behavior of users who are at the same position is specified from the place attribute table 271 in the behavior specification process using the place attribute table 271 shown in FIG. 33, a social attribute of each of users can also be specified from the place attribute table 271.

For example, a user who is determined to be in conference on the basis of a place attribute table for specifying being in conference among the place attribute tables 271 stored in the place attribute table storage unit 270 of FIG. 35 is presumed to be a company employee. Furthermore, as a more detailed social attribute, for example, a user with a longer cumulative period of time for conference per day can also be presumed to be a senior company officer.

In addition, for example, with respect to a user who is determined to be eating and drinking on the basis of a place attribute table for specifying being in a pub, when the user is determined to be eating and drinking in different places on the basis of position information of the user, the eating can be presumed to be business dinners. Then the user can also be determined to be working in a sales department. Note that, when a user is determined to be eating and drinking in the same place, the corresponding restaurant can be presumed to be a favorite restaurant of the user.

Alternatively, with respect to a user who is determined to be working on the basis of a place attribute table for specifying being in an office, for example, the user has a long office stay time period, and thus the user can be presumed to be a researcher or have an indoor job such as a receptionist.

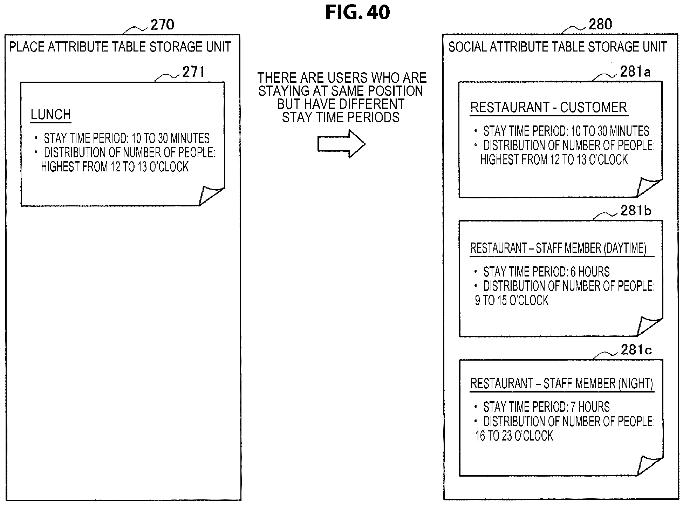

In addition, users who stay in the same place but have different social attributes can be considered. The place attribute table storage unit 270 has, for example, a place attribute table 271 for specifying having lunch as shown in on the left side of FIG. 40. Then, it is assumed that a place is specified as a restaurant in which a user whose behavior is specified as having lunch is staying from position information of the user using the place attribute table 271. Normally, the user is presumed to be a customer of the restaurant on the basis of the place attribute table 271. However, a user with a different stay time or stay time period while being determined to be at the same position on the basis of the same position determination process is presumed to be a staff member of the restaurant, not a customer.

Social attributes of users can also be presumed in a case where the users have different stay times or stay time periods while they are at the same position as described above. In a social attribute table, information regarding stay times is set as in the place attribute tables. For example, the social attribute table storage unit 280 has a social attribute table 281a for specifying customers, a social attribute table 281b for specifying staff members who work in daytime, a social attribute table 281c for specifying staff members who work at night, and the like recorded therein as shown on the right side of FIG. 40. The attribute specification unit 230 can specify social attributes of users from information based on stay times of the users with reference to the social attribute table storage unit 280.

<4. Hardware configuration>

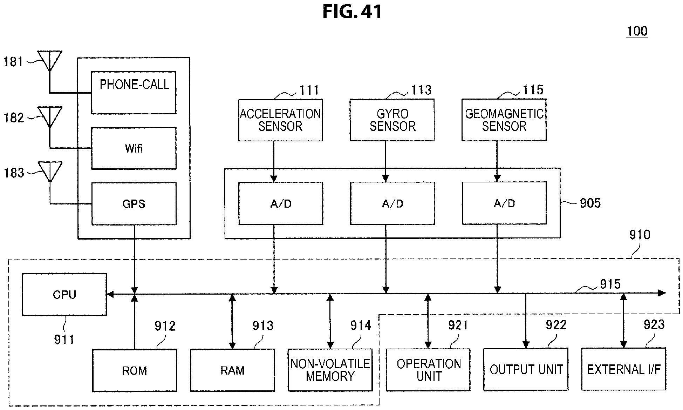

A hardware configuration of the device 100 according to the embodiment of the present disclosure will be described with reference to FIG. 41. FIG. 41 is a block diagram showing an example of a hardware configuration of the device 100 according to the embodiment of the present disclosure.

The device 100 includes sensors such as the acceleration sensor 111, the gyro sensor 113, and the geomagnetic sensor 115 as illustrated in FIG. 9. As other sensors, for example, various sensors including an angular velocity sensor, an illuminance sensor, a temperature sensor, a barometric sensor, a sound sensor (a microphone), and the like may be included. Sensors acquire information regarding a state of the device 100, for example, an attitude of a housing of the device 100, or the like, or information regarding a peripheral environment of device 100 such as brightness, or noise in peripheries of the device 100. Detection values of the sensor unit 110 are A/D converted by an A/D converter 905 and input to a control unit 910.

In addition, the device 100 includes a communication device which is a communication interface including a communication device for connecting to a communication network in order to acquire absolute position information. The communication device may be, for example, a communication card for a Local Area Network (LAN), Bluetooth (registered trademark), Wi-Fi, or a wireless USB (WUSB), or the like. In addition, the communication device may be a router for optical communication, a router for an asymmetric digital subscriber line (ADSL), a modem for various kinds of communication, or the like. Furthermore, the device 100 may also include a GPS receiver that receives signals of global navigation satellite systems (GNSS) to measure latitude, longitude, and altitude. In FIG. 41, a phone-call antenna 181, a Wi-Fi antenna 182, and a GPS antenna 183 are described. Signals acquired by each of the antennas 181, 182, and 183 are input to the control unit 910.

The control unit 910 includes a central processing unit (CPU) 911, a read only memory (ROM) 912, a random access memory (RAM) 913, and a non-volatile memory 914. The CPU 911 functions as an arithmetic processing device and a control device, and controls all or some operations performed within the device 100 in accordance with various programs recorded in the ROM 912, the RAM 913, and the non-volatile memory 914. The ROM 912 stores programs, arithmetic parameters, and the like to be used by the CPU 911. The RAM 913 primarily store programs to be used in execution of the CPU 911, parameters that appropriately change in the execution, and the like. The CPU 911, the ROM 912, the RAM 913, and the non-volatile memory 914 are connected to each other via a host bus 915. Note that the device 100 may also have a processing circuit such as a digital signal processor (DSP), an application specific integrated circuit (ASIC), or a field-programmable gate array (FPGA) instead of or along with the CPU 911.

Furthermore, the host bus 915 is connected to an external bus (which is not illustrated) such as a peripheral component interconnect/interface (PCI) bus via a bridge (which is not illustrated). The device 100 may also include an operation unit 921, an output unit 922, an external I/F 923, and the like connected thereto via the external bus. The operation unit 921 is a device operated by a user, for example, a mouse, a keyboard, a touch panel, a button, a switch, a lever, and the like. The operation unit 921 may be, for example, a remote controller using infrared rays or other radio waves. The operation unit 921 includes an input control circuit that generates an input signal on the basis of information input by a user and outputs the signal to the CPU 911. By operating the operation unit 921, a user inputs various kinds of data or gives an instruction of a process operation to the device 100.

The output unit 922 includes a device that can inform a user of acquired information using senses such as senses of vision, hearing, and touch. The output unit 922 may be, for example, electronic paper, a non-volatile display such as a memory-type liquid crystal display, a display device such as MEMS display, an audio output device such as a speaker or headphones, a vibrator, or the like. The output unit 922 outputs a result obtained from a process of the device 100 using text, a video such as an image, a sound such as a voice or an acoustic effect, vibration, or the like.

The external I/F 923 is a port for connecting apparatuses to the device 100. The external I/F 923 can include, for example, a Universal Serial Bus (USB) port, an IEEE 1394 port, a Small Computer System Interface (SCSI) port, or the like. In addition, the external I/F 923 can be an RS-232C port, an optical audio terminal, a High-Definition Multimedia Interface (HDMI; registered trademark) port, or the like. Various kinds of data can be exchanged between the device 100 and an external connection apparatus by connecting the external connection apparatus to the external I/F 923.

The example of the hardware configuration of the device 100 has been described above. Each of the constituent elements may use versatile members, or may be realized by hardware specialized in the functions of each of the constituent elements. Such a configuration can be appropriately changed in accordance with a technical level at each execution time. In addition, the server 200 included in the information processing system 1 according to the present embodiment can be realized by a device with an equivalent hardware configuration.

<5. Supplement

(5.1. Feature amount other than relative track)

In the above-described embodiments, the case where same position determination is performed on the basis of relative tracks specified using detected values obtained by the inertial sensors has been described. However, in the present disclosure, the same position determination process can be similarly executed even using feature amounts other than relative tracks.

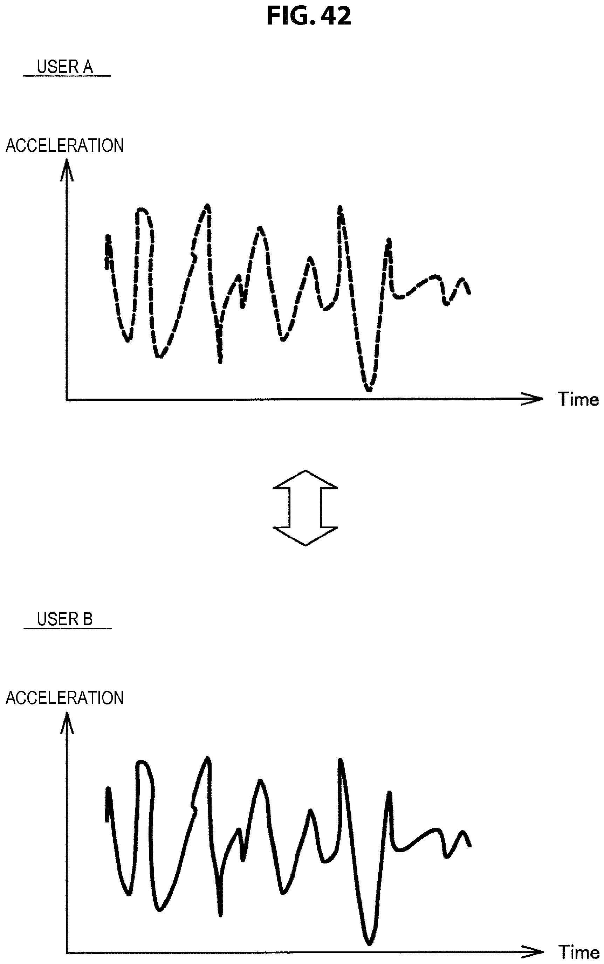

For example, same position determination can be performed using time series data of detected values of sensors. In a case where time series data of detected values of an acceleration sensor is acquired, the same determination as in the above-described embodiments can be performed by comparing similarities of waveforms of time series data of a predetermined time period as illustrated in, for example, FIG. 42.

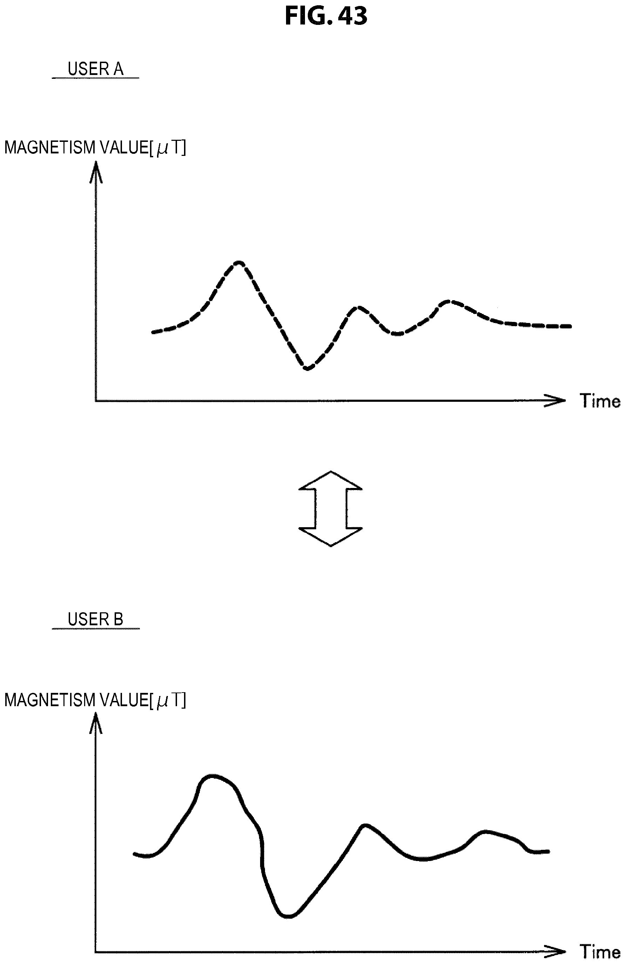

Alternatively, the same determination as in the above-described embodiments can be performed by comparing, for example, similarities of waveforms of time series data of environment sensors such as a geomagnetic sensor and a barometric sensor, instead of time series data of detected values of an inertial sensor such as an acceleration sensor or a gyro sensor as illustrated in FIG. 43. As other environment sensors, for example, there are a barometric sensor, a temperature sensor, a humidity sensor, wind speed sensor, a microphone, and the like. In FIG. 43, for example, time series data of magnetism values acquired by a geomagnetic sensor is compared. Indoor places of buildings with reinforcing bars mostly have unique magnetic patterns depending on places, and thus highly accurate same position determination is expected to be performed by using detected values detected by geomagnetic sensors. Note that geomagnetic sensors have monotonous magnetic patterns in outdoor places, and thus are suitable for indoor use. It is considered that effective data can be acquired by using environment sensors proper for environments.

(5.2. User consent to information collection)

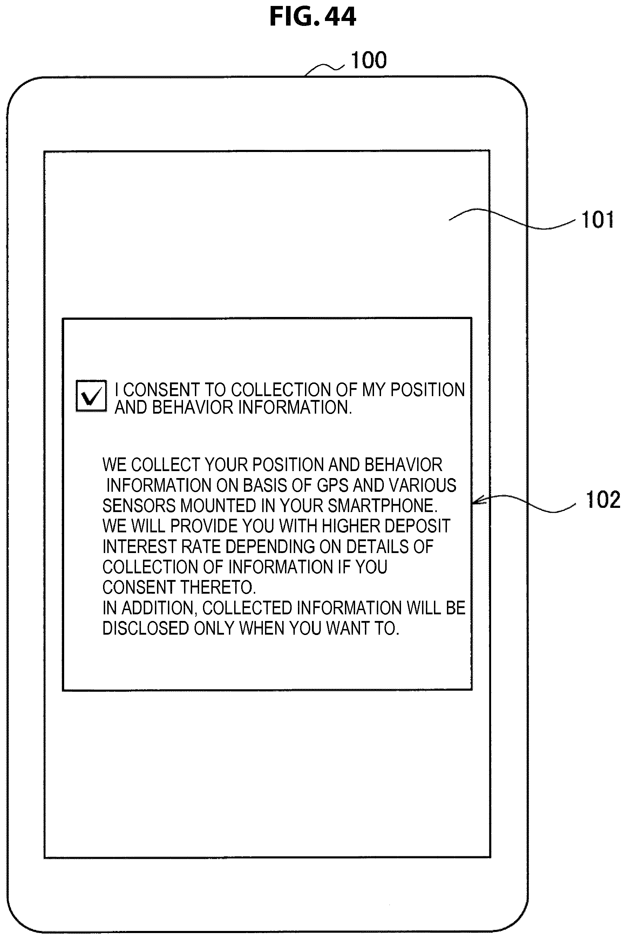

In the information processing system 1 according to the above-described embodiment, it is necessary to collect information for specifying behaviors of users acquired by the device 100. It is desirable to gain consent from users to collection of information for specifying behaviors, for example, position information, time information, and the like to operate the information processing system 1. Consent of a user to information collection can be provided by displaying an information collection consent screen 102 on a display 101 of the device 100 held by the user and checking a checkbox as shown in, for example, FIG. 44. At this time, an incentive for consent to the information collection may be provided to the user. In a case where the user has a bank account opened, for example, a proposal to provide a higher deposit interest rate for the consent to information collection in return can be considered.

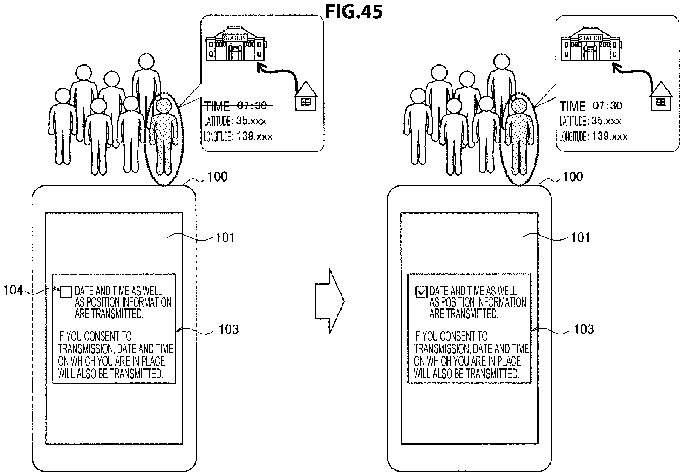

In addition, in the above-described embodiments, an absolute time (date and time) is not necessary for specifying absolute position information of a user. On the other hand, if an absolute time can be acquired, for example, it is possible to distinguish whether a user is having lunch or dinner in a case where the user is staying at a restaurant, then an information amount of a behavior to be recognized increases. Thus, an absolute time transmission consent screen 103 may be displayed on the display 101 of the device 100 and the user may be caused to select whether the absolute time is to be transmitted as illustrated in FIG. 45. On the left side of FIG. 45, since the checkbox of the absolute time transmission consent screen 103 is not checked, the absolute time is not transmitted to the server 200. On the other hand, since the checkbox of the absolute time transmission consent screen 103 is checked on the right side of FIG. 45, the absolute time is transmitted to the server 200.

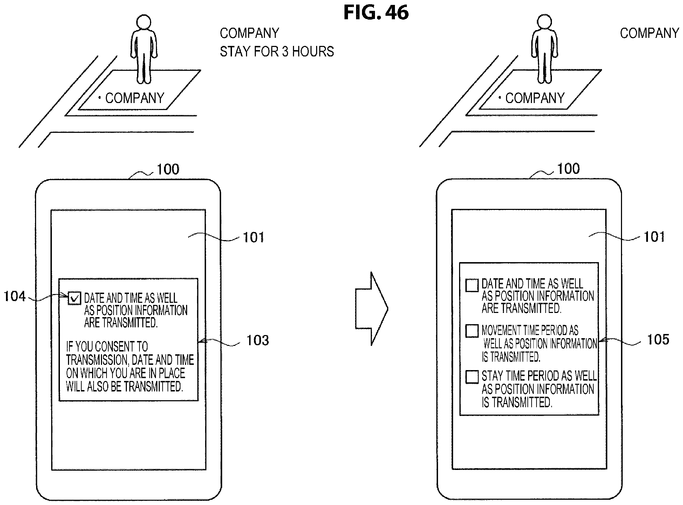

Although whether the absolute time of the user is to be transmitted is confirmed, the user may check whether only a relative time such as a movement time is to be transmitted although the absolute time is not transmitted in FIG. 45. As illustrated on the left side of FIG. 46, for example, an absolute time is transmitted in a case where the checkbox of the absolute time transmission consent screen 103 is checked. In a case where the checkbox of the absolute time transmission consent screen 103 is not checked, a relative time transmission consent screen 105 for checking whether a relative time is to be transmitted may be caused to be displayed as illustrated on the right side of FIG. 46. The relative time transmission consent screen 105 may be caused to display, for example, a case where an absolute time is transmitted to the server 200, a case where only a relative time is transmitted to the server 200, a case where only a stay time period is transmitted to the server 200, and the like. The device 100 transmits the content checked on the relative time transmission consent screen 105 to the server 200. In a case where no checkboxes of the relative time transmission consent screen 105 are checked, no information regarding time is transmitted to the server 200.

When a movement time and a stay time period are transmitted to the server 200, there are cases in which a behavior of a user can be presumed with no absolute time transmitted. For example, a certain user is assumed to stay 3 hours at his or her company, then move to a restaurant for 5 minutes, and stay at the restaurant for 15 minutes. In a case where a behavior of the user at the restaurant is presumed to having lunch using the technique of the above-described third embodiment, for example, the stay time at the restaurant is presumed to be around 12 o'clock. Then, the user can be presumed to have stayed at the company through the morning by counting backward from the presumed stay time.

It should be understood by those skilled in the art that various modifications, combinations, subcombinations and alterations may occur depending on design requirements and other factors insofar as they are within the scope of the appended claims or the equivalents thereof.

Further, the effects described in this specification are merely illustrative or exemplified effects, and are not limitative. That is, with or in the place of the above effects, the technology according to an embodiment of the present disclosure may achieve other effects that are clear to those skilled in the art from the description of this specification.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Additionally, the present technology may also be configured as below.

(1) An information processing device including:

a determination unit that determines a similarity of positions of a plurality of users on a basis of time series data which is acquired for each of the users and with which a movement state of each of the users can be specified.

(2) The information processing device according to (1), in which the determination unit determines the similarity of the positions of the users on the basis of the time series data with respect to a same area.

(3) The information processing device according to (1) or (2), in which the determination unit performs same position determination of the plurality of users on a basis of relative tracks obtained on the basis of the time series data.

(4) The information processing device according to any one of (1) to (3), in which the determination unit includes a synchronization processing unit that synchronizes each piece of the time series data with two pieces of the time series data used as determination subjects, a deviation degree calculation unit that calculates a degree of deviation of the synchronized time series data, and a determination processing unit that determines the similarity of the positions of the users on a basis of the calculated degree of deviation.

(5) The information processing device according to (4), in which the synchronization processing unit compartmentalizes each piece of the time series data in a unit of a predetermined scale, standardizes a scale of each piece of the time series data for each compartmentalized period, and matches a data starting position of one piece of the time series data serving as a reference with a data starting position of another piece of the time series data and synchronizes the one piece of the time series data with the other piece of the time series data for each of the periods.

(6) The information processing device according to any one of (1) to (5), in which the time series data is a detected value of an inertial sensor.

(7) The information processing device according to any one of (1) to (5), in which the time series data is a detected value of an environment sensor.

(8) The information processing device according to any one of (1) to (7), further including:

an absolute position information acquisition unit that acquires absolute position information indicating absolute positions of the users.

(9) The information processing device according to any one of (1) to (8), further including:

an attribute specification unit that decides attributes of one user and another user among the plurality of users whose positions are determined to be similar on a basis of at least absolute information of the one user.

(10) The information processing device according to (1), including:

an attribute specification unit that specifies attributes of the users,
in which the attribute specification unit specifies behaviors of the users on a basis of place attribute information based on a stay time at positions of the users calculated for the users whose positions are determined to be similar and a place attribute table in which information regarding the stay time is set, the information indicating the behaviors of the users.

(11) The information processing device according to (10), in which, in the place attribute table, the stay time and a stay time period of the users at the positions are set.

(12) The information processing device according to (10) or (11), in which the attribute specification unit updates the place attribute table on a basis of position information and information regarding a behavior acquired from at least one user among the users whose positions are determined to be similar.

(13) The information processing device according to any one of (10) to (12), in which the attribute specification unit specifies social attributes of the users on a basis of a comparison result of the place attribute information of the users and the specified place attribute table.

(14) The information processing device according to any one of (10) to (13), in which the attribute specification unit specifies social attributes of the users on a basis of the place attribute information of the users and a social attribute table indicating the social attributes of the users.

(15) An information processing method including:

acquiring, by a sensor, respective pieces of time series data with which movement states of a plurality of respective users can be specified for the users; and
determining, by a processor, a similarity of positions of the users on a basis of the time series data.

(16) A computer program for causing a computer to function as an information processing device that includes a determination unit that determines a similarity of positions of a plurality of users on a basis of time series data which is acquired for each of the users and with which a movement state of each of the users can be specified.

**Claims**

1. An information processing device comprising:

   a determination unit that determines a similarity of positions of a plurality of users on a basis of time series data which is acquired for each of the users and with which a movement state of each of the users can be specified.

2. The information processing device according to claim 1, wherein the determination unit determines the similarity of the positions of the users on the basis of the time series data with respect to a same area.

3. The information processing device according to claim 1 or 2, wherein the determination unit performs same position determination of the plurality of users on a basis of relative tracks obtained on the basis of the time series data.

4. The information processing device according to any one of claims 1 to 3, wherein the determination unit includes a synchronization processing unit that synchronizes each piece of the time series data with two pieces of the time series data used as determination subjects, a deviation degree calculation unit that calculates a degree of deviation of the synchronized time series data, and a determination processing unit that determines the similarity of the positions of the users on a basis of the calculated degree of deviation.

5. The information processing device according to claim 4, wherein the synchronization processing unit compartmentalizes each piece of the time series data in a unit of a predetermined scale, standardizes a scale of each piece of the time series data for each compartmentalized period, and matches a data starting position of one piece of the time series data serving as a reference with a data starting position of another piece of the time series data and synchronizes the one piece of the time series data with the other piece of the time series data for each of the periods.

6. The information processing device according to any one of claims 1 to 5, wherein the time series data is a detected value of an inertial sensor.

7. The information processing device according to any one of claims 1 to 5, wherein the time series data is a detected value of an environment sensor.

8. The information processing device according to any one of claims 1 to 7, further comprising:

   an absolute position information acquisition unit that acquires absolute position information indicating absolute positions of the users.

9. The information processing device according to any one of claims 1 to 8, further comprising:

   an attribute specification unit that decides attributes of one user and another user among the plurality of users whose positions are determined to be similar on a basis of at least absolute information of the one user.

10. The information processing device according to claim 1, comprising:

    an attribute specification unit that specifies attributes of the users,
    wherein the attribute specification unit specifies behaviors of the users on a basis of place attribute information based on a stay time at positions of the users calculated for the users whose positions are determined to be similar and a place attribute table in which information regarding the stay time is set, the information indicating the behaviors of the users.

11. The information processing device according to claim 10, wherein, in the place attribute table, the stay time and a stay time period of the users at the positions are set.

12. The information processing device according to claim 10 or 11, wherein the attribute specification unit updates the place attribute table on a basis of position information and information regarding a behavior acquired from at least one user among the users whose positions are determined to be similar.

13. The information processing device according to any one of claims 10 to 12, wherein the attribute specification unit specifies social attributes of the users on a basis of
    a comparison result of the place attribute information of the users and the specified place attribute table and/or the place attribute information of the users and a social attribute table indicating the social attributes of the users.

14. An information processing method comprising:

    acquiring, by a sensor, respective pieces of time series data with which movement states of a plurality of respective users can be specified for the users; and
    determining, by a processor, a similarity of positions of the users on a basis of the time series data.

15. A computer program for causing a computer to function as an information processing device that includes a determination unit that determines a similarity of positions of a plurality of users on a basis of time series data which is acquired for each of the users and with which a movement state of each of the users can be specified.

# FIG. 1

USER B USER A

8:00 AREA Q 7:30 AREA Q

SNS
"I AM EMPLOYEE OF COMPANY X"

SIMILAR

B A

SAME COMPANY

B A

B A

EMPLOYEES OF COMPANY X

**FIG. 2**

**FIG. 3**

# FIG. 4

COMMON ROUTE

STATION

LATITUDE : 35.xxx
LONGITUDE : 139.xxx

PLATFORM OF
EACH LINE

INSIDE OF
STATION S

PASS THROUGH "CERTAIN COMMON ROUTE"

CONFIRM ABSOLUTE
POSITION TRACKS OF ALL

**FIG. 5**

# FIG. 6

# FIG. 7

# FIG. 8

**FIG. 9**    1

## FIG. 10

DEVICE — 100

SERVER — 200

TRANSMIT AUTHENTICATION INFORMATION

AUTHENTICATION RESULT

AUTHENTI-
CATION
PROCESS  } S10

AUTHENTICATION OK

S20

CALCULATE AND TRANSMIT RELATIVE TRACK

STORE TRACK

S30

ACQUIRE AND TRANSMIT ABSOLUTE POSITION INFORMATION

STORE ABSOLUTE
POSITION
PRESUME AREA

S40

TRANSMIT SAME POSITION
DETERMINATION RESULT

PERFORM SAME
POSITION
DETERMINATION
OF N PEOPLE

DISPLAY SAME POSITION
DETERMINATION RESULT

# FIG. 11

START

| STOP TIME = 0 | ~S100 |

| POSITION (X, Y, Z) = (0, 0, 0) | ~S102 |

| AZIMUTH = 0 | ~S104 |

| ACCELERATION BUFFER | ~S106 |

DURING STOP? —— NO  ~S108

YES

| SPEED (X, Y, Z) = (0, 0, 0) | ~S110 |

| START COUNTING OF STOP TIME | ~S112 |

STOP TIME ≥ PREDETERMINED TIME? —— NO  ~S114

YES

| CALCULATE GRAVITY FROM ACCELERATION AVERAGE VALUE ACQUIRED DURING STOP | ~S116 |

| CALCULATE INITIAL ATTITUDE OF DEVICE ON BASIS OF GRAVITY | ~S118 |

| CALCULATE POSITION | ~S120 |

END

# FIG. 12

```
START
  │
  ▼
```

| ACCELERATION/GYRO SAMPLING | ～S121 |

```
  │
  ▼
```

| CALCULATE ATTITUDE ANGLE | ～S122 |

```
  │
  ▼
```

| CONVERT ACCELERATION COORDINATES WITH ATTITUDE ANGLE | ～S123 |

```
  │
  ▼
```

| SUBTRACT GRAVITY VALUE FROM ACCELERATION VALUE | ～S124 |

```
  │
  ▼
```

| INTEGRATE ACCELERATION AND CALCULATE SPEED | ～S125 |

```
  │
  ▼
```

| INTEGRATE SPEED AND CALCULATE POSITION | ～S126 |

```
  │
  ▼
```

| TRANSMIT TIME AND POSITION INFORMATION TO SERVER | ～S127 |

```
  │
  ▼
END
```

# FIG. 13

```
        ┌─────────────┐
        │    START    │
        └─────────────┘
               │
               ▼
┌──────────────────────────────────────────┐
│  ACQUIRE ABSOLUTE POSITION INFORMATION    │ ～ S130
└──────────────────────────────────────────┘
               │
               ▼
┌──────────────────────────────────────────┐
│ SPECIFY AREA TO WHICH USER (DEVICE) BELONGS │ ～ S132
└──────────────────────────────────────────┘
               │
               ▼
        ┌─────────────┐
        │     END     │
        └─────────────┘
```

**FIG. 14**

START

S140
NO
HAVE TRACKS OF TWO OR MORE
PEOPLE WITHIN SAME AREA FOR PREDETERMINED
TIME PERIOD BEEN BUFFERED?

YES

CALCULATE DEGREE OF TRACK DEVIATION OF
ARBITRARY TWO PEOPLE AMONG N PEOPLE  S141

S142
DEGREE OF TRACK DEVIATION
≤ PREDETERMINED VALUE?
NO

YES

S143
DETERMINE THAT USER IS
AT SAME POSITION

S144
DETERMINE THAT USER IS
AT DIFFERENT POSITION

S145
NO
HAVE $_nC_2$ ARITHMETIC
OPERATIONS BEEN COMPLETED?

YES

UPDATE AREA NUMBERS  S147

S146
NO
HAVE ARITHMETIC OPERATIONS
BEEN COMPLETED FOR ALL AREAS?

YES

END

**FIG. 15**

$L_B$

$L_A$

ROTATE

CORRECT SCALE

# FIG. 16

CURRENT POSITION

BUFFER TIME OF
5 SECONDS

CURRENT POSITION

BUFFER TIME OF
60 SECONDS

# FIG. 17

USER A   RELATIVE TRACK $L_A$

SAME POSITION?

USER B   RELATIVE TRACK $L_B$

(07:30 AREA IS UNKNOWN)

(08:00 AREA IS UNKNOWN)

AREA IS KNOWN

NOT SAME POSITION

(07:30 AREA Q)

(08:00 AREA R)

## FIG. 18

USER A   RELATIVE TRACK $L_A$

SAME POSITION?

USER B   RELATIVE TRACK $L_B$

(07:30 AREA IS UNKNOWN)
BUFFER TIME OF 60 SECONDS

(08:00 AREA IS UNKNOWN)
BUFFER TIME OF 60 SECONDS

PREDETERMINED TIME PERIOD ELAPSED

SIMILAR (SAME POSITION!)

BUFFER TIME OF 5 MINUTES

BUFFER TIME OF 5 MINUTES

# FIG. 19

# FIG. 20

# FIG. 21

## FIG. 22

DETECTED
VALUE

USER A

FAST WALKING
↓
TIME: EXTEND
DETECTED VALUE: REDUCE

Time

DETECTED
VALUE

USER B

SLOW WALKING
↓
TIME: REDUCE
DETECTED VALUE: EXTEND

Time

# FIG. 23

**FIG. 24**

**FIG. 25**

$$\Delta \theta = \Sigma ( \theta 2(n) - \theta 1(n)) / m$$

## FIG. 26

$P_{10}, P_{20}$
(REFERENCE POSITION) $\quad$ D_2(1)

$\bullet P_{25}$

$P_{24}$

D_1(1)

$\bullet P_{21}$

$P_{23}$

$P_{22}$

$P_{11}$

n=1

n=2 $P_{12}$

n=3 $P_{13}$

n=4 $P_{14}$

n=5 $P_{15}$

ScaleRatio= $\sum (D\_1(n)/D\_2(n))/ \ m$

# FIG. 27

$\triangle$ POS =POScenter_1 - POScenter_2

CENTER OF GRAVITY OF
RELATIVE TRACK 1 POScenter_1

CENTER OF GRAVITY OF
RELATIVE TRACK 2 POScenter_2

$P_{10}$
$P_{20}$
$P_{11}$
$P_{21}$
$P_{12}$
$P_{22}$
$P_{13}$
$P_{23}$
$P_{14}$
$P_{24}$
$P_{15}$
$P_{25}$

# FIG. 28

$$\text{Error} = \Sigma(\ (\text{Pos\_2\_x}[n] - \text{Pos\_1\_x}[n])^2 + (\text{Pos\_2\_y}[n] - \text{Pos\_1\_y}[n])^2\ )\ /\ m$$

## FIG. 29

**FIG. 30**

**FIG. 31**

START

CALCULATE DEGREE OF TRACK DEVIATION OF ARBITRARY TWO PEOPLE AMONG N PEOPLE — S200

DEGREE OF TRACK DEVIATION ≤ PREDETERMINED VALUE? — S202

NO

YES

CALCULATE DIFFERENTIAL AVERAGE OF ABSOLUTE TIME AT COORDINATES OF EACH OF ARBITRARY TWO PEOPLE AMONG N PEOPLE — S204

DIFFERENTIAL AVERAGE OF ABSOLUTE TIME ≤ PREDETERMINED VALUE? — S206

NO

YES

S214 — SET NEXT COMBINATION

DETERMINE THAT USERS ARE AT SAME POSITION — S208

DETERMINE THAT USERS ARE AT DIFFERENT POSITIONS — S210

NO — HAVE $_nC_2$ ARITHMETIC OPERATIONS BEEN COMPLETED? — S212

YES

END

# FIG. 32    1

# FIG. 33

```
         ┌─────────────┐
         │    START    │
         └──────┬──────┘
                │
                ▼
    ┌───────────────────────────┐
    │     AREA SCREENING        │ ～ S300
    └───────────┬───────────────┘
                │
                ▼
    ┌───────────────────────────┐
    │  EXECUTE SAME POSITION    │
    │  DETERMINATION PROCESS    │ ～ S310
    └───────────┬───────────────┘
                │
                ▼
    ┌───────────────────────────┐
    │  CALCULATE CURRENT PLACE  │
    │  ATTRIBUTE INFORMATION    │ ～ S320
    └───────────┬───────────────┘
                │
                ▼
    ┌───────────────────────────┐
    │    SPECIFY BEHAVIOR OF    │
    │  USER ON BASIS OF PLACE   │ ～ S330
    │     ATTRIBUTE TABLE       │
    └───────────┬───────────────┘
                │
                ▼
         ┌─────────────┐
         │     END     │
         └─────────────┘
```

# FIG. 34

BAROMETRIC
PRESSURE [hPa]

TIME

**FIG. 35**
~270

PLACE ATTRIBUTE TABLE STORAGE UNIT

~271

**LUNCH**
- STAY TIME PERIOD: 10 TO 30 MINUTES
- DISTRIBUTION OF NUMBER OF PEOPLE: HIGHEST FROM 12 TO 13 O'CLOCK

**BEAUTY SALON (MEN)**
- STAY TIME PERIOD: 30 TO 60 MINUTES
- DISTRIBUTION OF NUMBER OF PEOPLE: WEEKDAY: HIGHEST FROM 18 TO 19 O'CLOCK
  WEEKEND: EQUALLY DISTRIBUTED ALL DAY

**BEAUTY SALON (WOMEN)**
- STAY TIME PERIOD: 120 TO 180 MINUTES
- DISTRIBUTION OF NUMBER OF PEOPLE: WEEKDAY: HIGHEST FROM 17 TO 20 O'CLOCK
  WEEKEND: EQUALLY DISTRIBUTED ALL DAY

**PUB**
- STAY TIME PERIOD: 60 TO 120 MINUTES
- DISTRIBUTION OF NUMBER OF PEOPLE: HIGHEST FROM 18 TO 21 O'CLOCK

**EVENT (LIVE CONCERT)**
- STAY TIME PERIOD: 180 TO 300 MINUTES
- DISTRIBUTION OF NUMBER OF PEOPLE: WEEKDAY: HIGHEST FROM 18 O'CLOCK
  WEEKEND: EQUALLY DISTRIBUTED ALL DAY

**CONFERENCE**
- STAY TIME PERIOD: 60 TO 120 MINUTES
- DISTRIBUTION OF NUMBER OF PEOPLE: WEEKDAY: EQUALLY DISTRIBUTED FROM 9 TO 18 O'CLOCK
  WEEKEND: NONE

**CONFERENCE**
- STAY TIME PERIOD: 60 TO 120 MINUTES
- DISTRIBUTION OF NUMBER OF PEOPLE: WEEKDAY: EQUALLY DISTRIBUTED FROM 9 TO 18 O'CLOCK
  WEEKEND: NONE

**OFFICE**
- STAY TIME PERIOD: 7 TO 12 HOURS
- DISTRIBUTION OF NUMBER OF PEOPLE: FROM 9 TO 18 O'CLOCK

• • •

## FIG. 36

PLACE ATTRIBUTE INFORMATION

<DISTRIBUTION OF NUMBER OF PEOPLE AT TIMES>

NUMBER OF PEOPLE

10 O'CLOCK  11 O'CLOCK  12 O'CLOCK  13 O'CLOCK  14 O'CLOCK  15 O'CLOCK

TIME

<DISTRIBUTION OF NUMBER OF PEOPLE IN STAY TIME PERIODS>

NUMBER OF PEOPLE

10 MINUTES  20 MINUTES  30 MINUTES

STAY TIME PERIOD

# FIG. 37

PLACE ATTRIBUTE INFORMATION

NUMBER OF PEOPLE

<DISTRIBUTION OF NUMBER OF PEOPLE AT TIMES>

★

10
O'CLOCK 11
O'CLOCK 12
O'CLOCK 13
O'CLOCK 14
O'CLOCK 15
O'CLOCK

TIME

NUMBER OF PEOPLE

<DISTRIBUTION OF NUMBER OF PEOPLE IN STAY TIME PERIODS>

★

10
MINUTES 20
MINUTES 30
MINUTES

STAY TIME PERIOD

⇕

~270

PLACE ATTRIBUTE TABLE STORAGE UNIT

~271

LUNCH

• STAY TIME PERIOD: 10 TO 30 MINUTES
• DISTRIBUTION OF NUMBER OF PEOPLE: HIGHEST FROM 12 TO 13 O'CLOCK

• • •

**FIG. 38**

# FIG. 39

~271

LUNCH

• STAY TIME PERIOD: 10 TO 30 MINUTES
• DISTRIBUTION OF NUMBER OF
PEOPLE: 12:00 TO 13:00

⇨

~271

LUNCH

• STAY TIME PERIOD: 15 TO 35 MINUTES
• DISTRIBUTION OF NUMBER OF
PEOPLE: 12:30 TO 13:30

## FIG. 40

~270

PLACE ATTRIBUTE TABLE STORAGE UNIT

~271

LUNCH

- STAY TIME PERIOD: 10 TO 30 MINUTES
- DISTRIBUTION OF NUMBER OF PEOPLE: HIGHEST FROM 12 TO 13 O'CLOCK

THERE ARE USERS WHO ARE STAYING AT SAME POSITION BUT HAVE DIFFERENT STAY TIME PERIODS

⇨

~280

SOCIAL ATTRIBUTE TABLE STORAGE UNIT

~281a

RESTAURANT - CUSTOMER

- STAY TIME PERIOD: 10 TO 30 MINUTES
- DISTRIBUTION OF NUMBER OF PEOPLE: HIGHEST FROM 12 TO 13 O'CLOCK

~281b

RESTAURANT – STAFF MEMBER (DAYTIME)

- STAY TIME PERIOD: 6 HOURS
- DISTRIBUTION OF NUMBER OF PEOPLE: 9 TO 15 O'CLOCK

~281c

RESTAURANT – STAFF MEMBER (NIGHT)

- STAY TIME PERIOD: 7 HOURS
- DISTRIBUTION OF NUMBER OF PEOPLE: 16 TO 23 O'CLOCK

**FIG. 41**

<u>100</u>

181 —

PHONE-CALL

182 —

Wifi

183 —

GPS

~ 111
ACCELERATION SENSOR

~ 113
GYRO SENSOR

~ 115
GEOMAGNETIC SENSOR

A/D

A/D

A/D

~ 905

910

CPU

~ 915

911

912

913

914

921

922

923

ROM

RAM

NON-VOLATILE MEMORY

OPERATION UNIT

OUTPUT UNIT

EXTERNAL I/F

# FIG. 42

USER A

ACCELERATION

Time

USER B

ACCELERATION

Time

# FIG. 43

USER A

MAGNETISM VALUE[μT]

Time

USER B

MAGNETISM VALUE[μT]

Time

# FIG. 44

~100

101

102

☑ I CONSENT TO COLLECTION OF MY POSITION
AND BEHAVIOR INFORMATION.


WE COLLECT YOUR POSITION AND BEHAVIOR
INFORMATION ON BASIS OF GPS AND VARIOUS
SENSORS MOUNTED IN YOUR SMARTPHONE.
WE WILL PROVIDE YOU WITH HIGHER DEPOSIT
INTEREST RATE DEPENDING ON DETAILS OF
COLLECTION OF INFORMATION IF YOU
CONSENT THERETO.
IN ADDITION, COLLECTED INFORMATION WILL BE
DISCLOSED ONLY WHEN YOU WANT TO.

**FIG.45**

## FIG. 46

COMPANY
STAY FOR 3 HOURS

· COMPANY

COMPANY

· COMPANY

~100

~101

104

☑ DATE AND TIME AS WELL
AS POSITION INFORMATION
ARE TRANSMITTED.

IF YOU CONSENT TO
TRANSMISSION, DATE AND TIME
ON WHICH YOU ARE IN PLACE
WILL ALSO BE TRANSMITTED.

~103

~100

~101

☐ DATE AND TIME AS WELL
AS POSITION INFORMATION
ARE TRANSMITTED.

☐ MOVEMENT TIME PERIOD AS
WELL AS POSITION INFORMATION
IS TRANSMITTED.

☐ STAY TIME PERIOD AS WELL
AS POSITION INFORMATION
IS TRANSMITTED.

105

Europäisches
Patentamt

European
Patent Office

Office européen
des brevets

# EUROPEAN SEARCH REPORT

Application Number

EP 18 15 2826

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/239607 A1 (RAO JIA [CN] ET AL) 20 September 2012 (2012-09-20) <br> * paragraph [0005] - paragraph [0006] * <br> * paragraph [0015] - paragraph [0018] * <br> * paragraph [0020] - paragraph [0021] * <br> * paragraph [0027] - paragraph [0031] * <br> * paragraph [0048] * <br> * paragraph [0052] - paragraph [0056] * <br> * paragraph [0063] - paragraph [0070] * <br> * paragraph [0072] * <br> ----- | 1-15 | INV. <br> G06Q30/02 |
| X | WO 2015/194098 A1 (SONY CORP [JP]) 23 December 2015 (2015-12-23) <br> * paragraph [0052] - paragraph [0058] * <br> * paragraph [0047] - paragraph [0084] * <br> * paragraph [0088] - paragraph [0090] * <br> * paragraph [0098] - paragraph [0100] * <br> * figures 3, 4, 10, 31 * <br> ----- | 1-15 | |
| X | US 2014/180626 A1 (KIMISHIMA MASATO [JP]) 26 June 2014 (2014-06-26) <br> * paragraph [0008] - paragraph [0009] * <br> * paragraph [0074] - paragraph [0076] * <br> * paragraph [0116] - paragraph [0143] * <br> * paragraph [0200] - paragraph [0206] * <br> * figures 1, 2 * <br> ----- | 1-15 | TECHNICAL FIELDS SEARCHED (IPC) <br><br> G06Q |

The present search report has been drawn up for all claims

| Place of search | Date of completion of the search | Examiner |
|---|---|---|
| The Hague | 29 March 2018 | Marcu, Antoniu |

EPO FORM 1503 03.82 (P04C01)

## ANNEX TO THE EUROPEAN SEARCH REPORT
## ON EUROPEAN PATENT APPLICATION NO.

EP 18 15 2826

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2018

| Patent document cited in search report | | | Publication date | Patent family member(s) | | Publication date |
|---|---|---|---|---|---|---|
| US 2012239607 | A1 | | 20-09-2012 | CN 102682041 | A | 19-09-2012 |
| | | | | JP 5452568 | B2 | 26-03-2014 |
| | | | | JP 2012198870 | A | 18-10-2012 |
| | | | | US 2012239607 | A1 | 20-09-2012 |
| WO 2015194098 | A1 | | 23-12-2015 | CN 106461399 | A | 22-02-2017 |
| | | | | EP 3158518 | A1 | 26-04-2017 |
| | | | | JP 2016006611 | A | 14-01-2016 |
| | | | | US 2017074666 | A1 | 16-03-2017 |
| | | | | WO 2015194098 | A1 | 23-12-2015 |
| US 2014180626 | A1 | | 26-06-2014 | CN 103765161 | A | 30-04-2014 |
| | | | | JP 5953677 | B2 | 20-07-2016 |
| | | | | JP 2013050307 | A | 14-03-2013 |
| | | | | US 2014180626 | A1 | 26-06-2014 |
| | | | | WO 2013031355 | A1 | 07-03-2013 |

EPO FORM P0459

For more details about this annex : see Official Journal of the European Patent Office, No. 12/82

**REFERENCES CITED IN THE DESCRIPTION**

**Patent documents cited in the description**

- JP 2017009693 A
- JP 2017213650 A
- JP 2010108037 A